# EUROPEAN PATENT APPLICATION

(11) **EP 4 783 623 A1**
(43) Date of publication of application: **29.07.2026**
(21) Application number: 25824991.1
(22) Date of filing: 05.06.2025
(51) Int. Cl.: H04W 4/12

(54) **NOTIFICATION PROCESSING METHOD AND PROCESSING APPARATUS**

(30) Priority: 29.06.2024 CN 202410866900
(71) Applicant: HUAWEI TECHNOLOGIES CO., LTD., Shenzhen 518129 (CN)
(72) Inventor: CHEN, Li, Shenzhen, Guangdong 518129 (CN)
(74) Representative: Maiwald GmbH
(86) International application number: PCT/CN2025/099217
(87) International publication number: WO 2026/001605

(57) **Abstract**

Embodiments of this application provide a notification processing method and processing apparatus, applied to the field of terminal technologies. The method includes: A first electronic device and a second electronic device establish a network with each other, where the first electronic device has a notification synchronization function, that is, sending a received notification of an application to the second electronic device. When a same application is installed on both the second electronic device and the first electronic device, and login accounts of the application are the same, the second electronic device may receive a notification of the application from a server, or may receive a notification of the application from the first electronic device. If all received notifications are displayed, the notifications are displayed repeatedly. In embodiments of this application, after receiving the notification, the second electronic device may determine whether a same notification has been received. If the notification has not been received, the second electronic device displays the notification; or if the notification has not been received, the second electronic device does not display the notification. This helps reduce a probability of repeatedly displaying the notification.

## Description

This application claims priority to Chinese Patent Application No. 202410866900.8, filed with the China National Intellectual Property Administration on June 29, 2024 and entitled "NOTIFICATION PROCESSING METHOD AND PROCESSING APPARATUS", which is incorporated herein by reference in its entirety.

### TECHNICAL FIELD

Embodiments of this application relate to the field of terminal technologies, and in particular, to a notification processing method and processing apparatus.

### BACKGROUND

With the development of terminal technologies, notification synchronization may be implemented between a plurality of electronic devices. For example, a first electronic device receives a notification of a chat application, and the first electronic device may synchronize the notification with a second electronic device. In this way, a user can receive the notification regardless of whether the user is using the first electronic device or the second electronic device.

However, when the chat application is also installed on the second electronic device, and an account of the chat application is the same as an account of the chat application on the first electronic device, the second electronic device may receive two notifications, causing repeated display and affecting user experience.

### SUMMARY

Embodiments of this application provide a notification processing method and processing apparatus, applied to the field of terminal technologies, to help reduce a probability of repeatedly displaying a notification, thereby improving user experience.

According to a first aspect, an embodiment of this application provides a notification processing method. The method may be applied to a communication system that includes a first electronic device and a second electronic device. The method includes: The first electronic device and the second electronic device establish a network with each other, where a first application and a second application are installed on the first electronic device; the first application is not installed on the second electronic device, or the first application is installed, but a login account of the first application on the second electronic device is different from a login account of the first application on the first electronic device; and the second application is installed on the second electronic device, and a login account of the second application on the first electronic device is the same as a login account of the second application on the second electronic device. When the first application has a first notification, the first electronic device displays the first notification in a first mode, and the second electronic device displays the first notification in a second mode, where the first mode includes a notification display mode present when a message is obtained from a server, and the second mode includes a notification display mode present when a message or a notification is obtained from a networking device. When the second application has a second notification, the first electronic device displays the second notification in the first mode, and the second electronic device displays the second notification in either the first mode or the second mode.

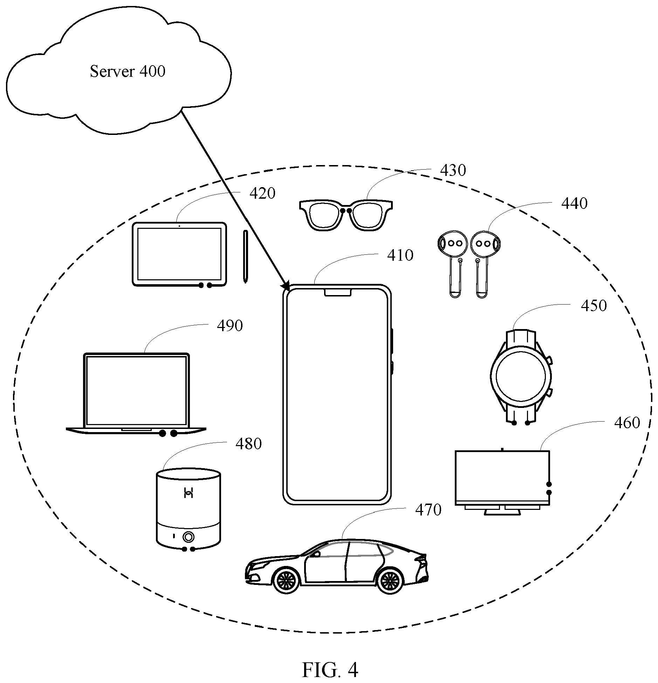

That the first electronic device and the second electronic device establish the network with each other may be understood as that the first electronic device and the second electronic device may communicate with each other to collaboratively complete a same service. That the first electronic device and the second electronic device establish the network with each other may also be referred to as that the first electronic device and the second electronic device establish a super device network with each other. This is not limited in embodiments of this application. For establishing the network between the first electronic device and the second electronic device, refer to the scenario shown in FIG. 4.

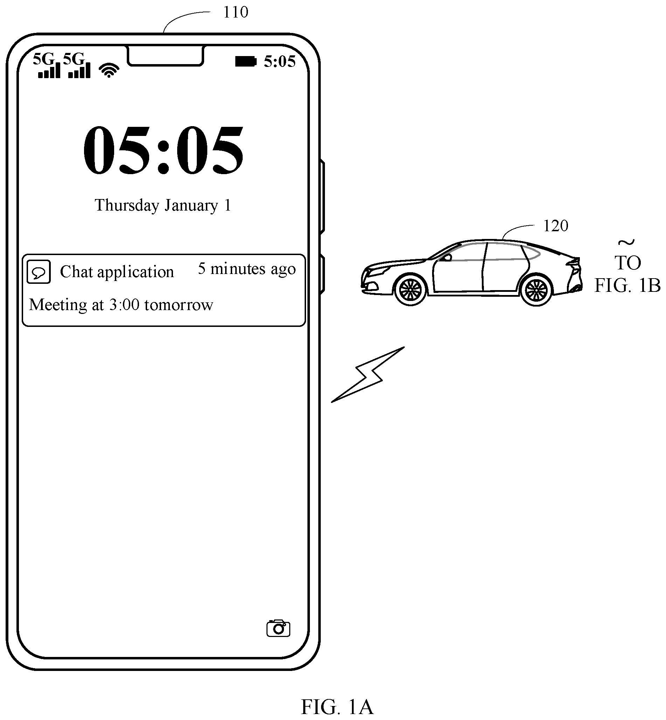

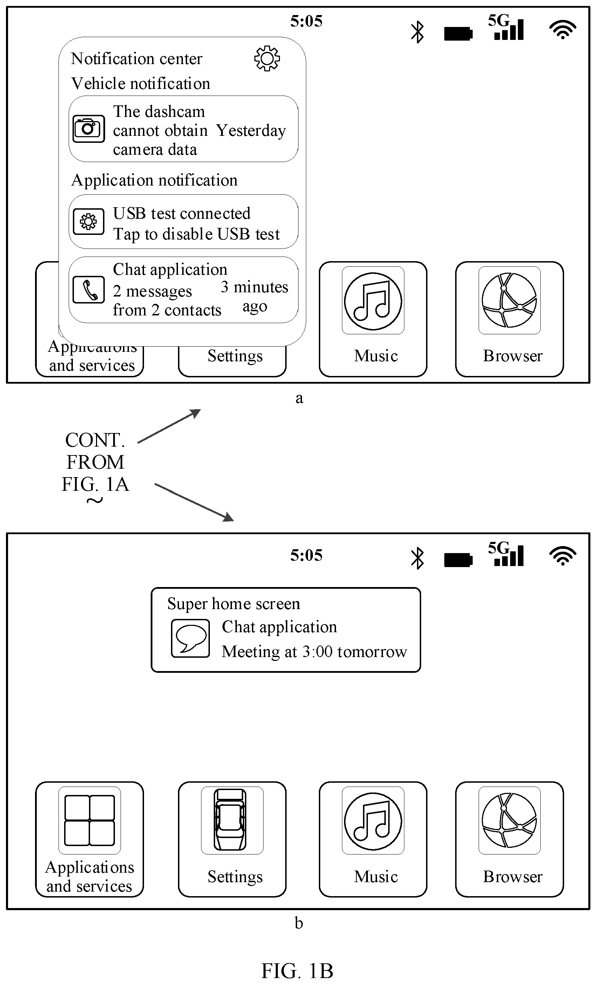

The first application has the first notification, and the first electronic device may obtain the first notification from the server. Therefore, the first notification may be displayed in the first mode. The first electronic device has a notification synchronization function, and may send the first notification to the second electronic device. The second electronic device obtains the first notification from the first electronic device, and may display the first notification in the second mode. In some examples, for the first mode, refer to a notification mode of a chat application displayed by the mobile phone 110 in FIG. 1A.

The first application has the second notification, and the first electronic device may obtain the second notification from the server. Therefore, the second notification may be displayed in the first mode. The first electronic device has the notification synchronization function, and may send the second notification to the second electronic device. Although the second electronic device may obtain the second notification from the first electronic device, or may obtain the second notification from the server, the second electronic device may display the second notification in either the first mode or the second mode. This helps reduce a probability of repeatedly displaying the notification.

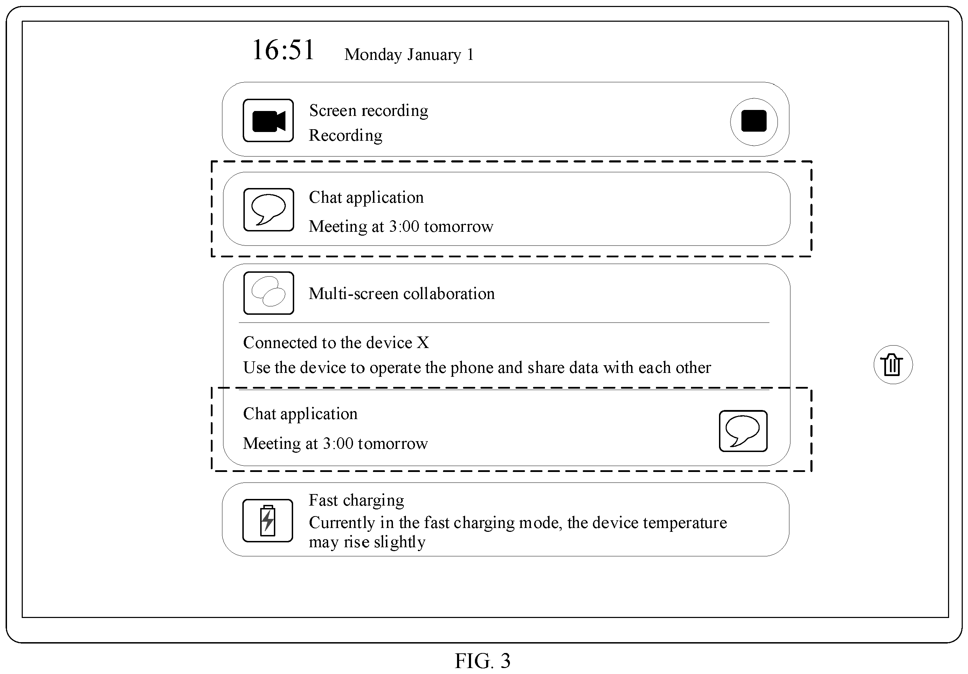

In some examples, for the first mode, refer to a notification shown in a first dashed-line box in FIG. 3. For the second mode, refer to a notification shown in a second dashed-line box in FIG. 3.

Whether the second electronic device displays the second notification in the first mode or the second notification in the second mode may depend on whether the second notification is first obtained from the first electronic device or the second notification is first obtained from the server. If the second electronic device first obtains the second notification from the first electronic device, the second electronic device displays the second notification in the second mode. If the second electronic device first obtains the second notification from the server, the second electronic device displays the second notification in the first mode.

In a possible implementation, that when the second application has the second notification, the second electronic device displays the second notification in either the first mode or the second mode includes: When the second application has the second notification, and the second electronic device obtains the second notification from the server, the second electronic device determines whether an identifier that is the same as a first identifier carried in the second notification is stored. When no identifier that is the same as the first identifier is stored, the second electronic device displays the second notification in the first mode, and stores the first identifier. When the second electronic device obtains the second notification from the first electronic device, the second electronic device determines whether an identifier that is the same as a first identifier carried in the second notification is stored. When the identifier that is the same as the first identifier is stored, the second electronic device skips displaying the second notification in the second mode.

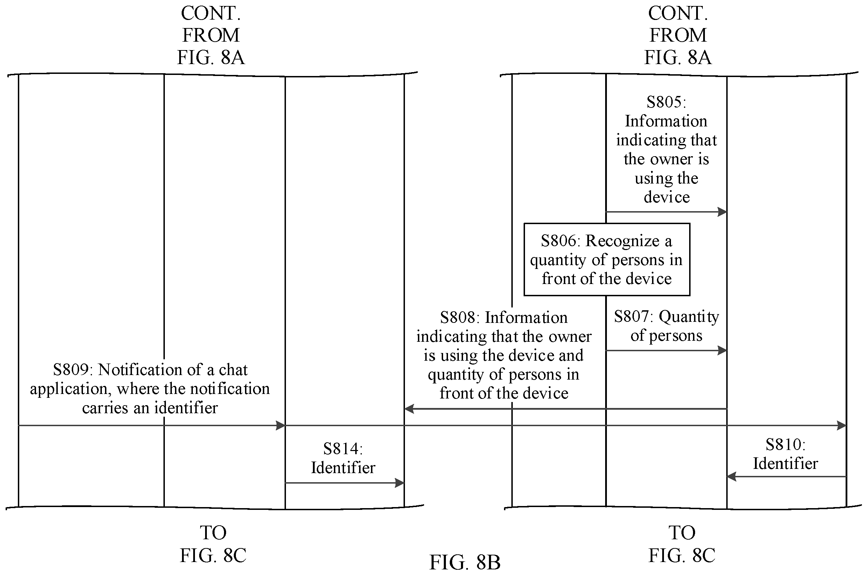

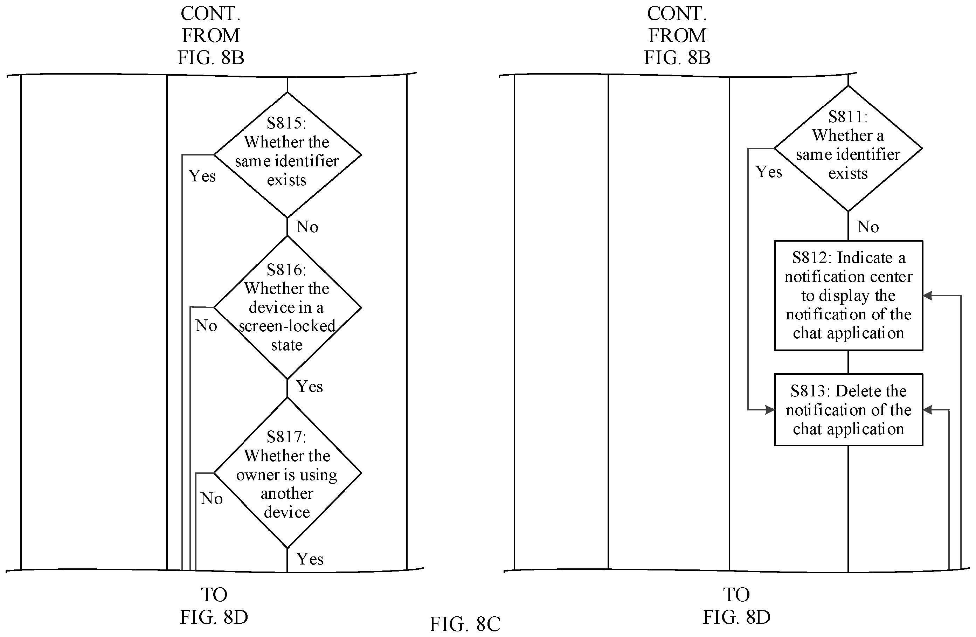

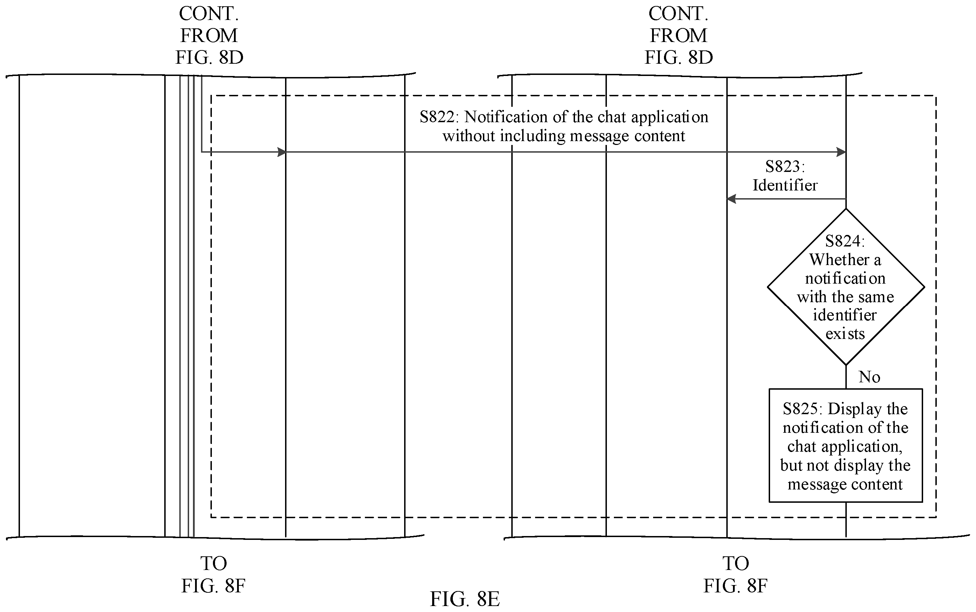

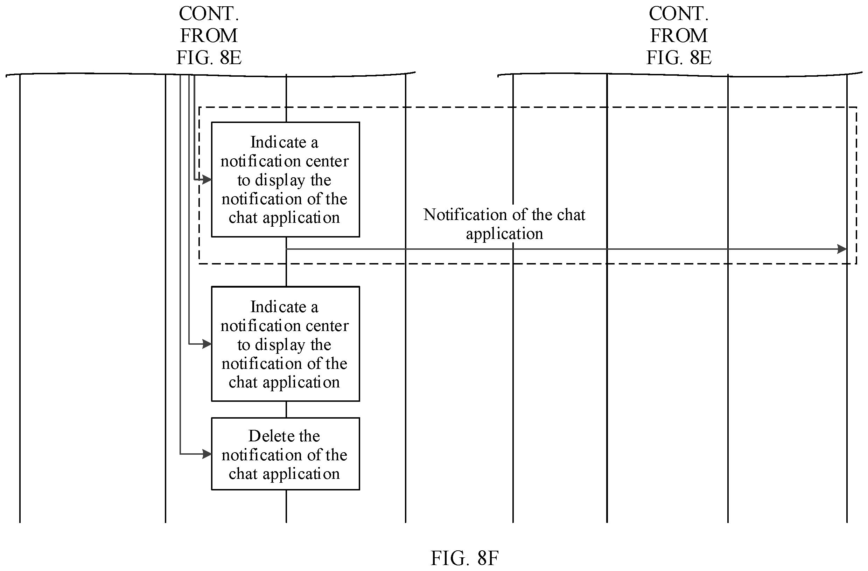

When the second application has the second notification, and the second electronic device first receives the second notification from the server, in this case, the second electronic device does not store the identifier that is the same as the identifier carried in the second notification, and the second electronic device may display the second notification in the first mode, and store the identifier carried in the second notification. In an example, for the method, refer to S809 to S812 in FIG. 8B and FIG. 8C.

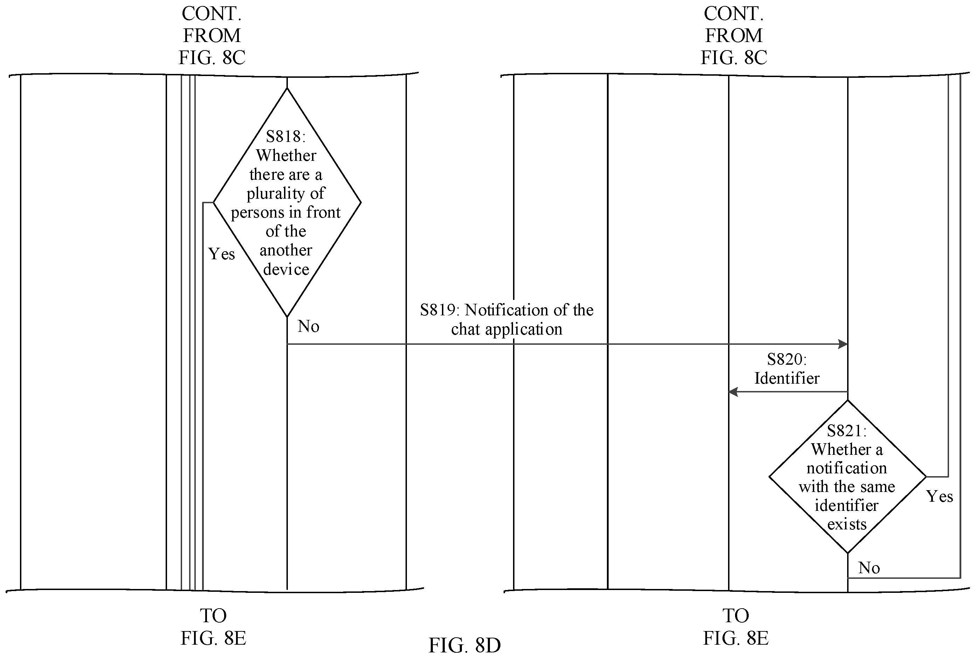

The second electronic device further receives the second notification from the first electronic device. In this case, the second electronic device stores the identifier carried in the second notification, and the second electronic device may skip displaying the second notification in the second mode. In an example, for the method, refer to S819 to S821 in FIG. 8D.

This helps reduce a probability of repeatedly displaying the notification.

In a possible implementation, that when the second application has the second notification, the second electronic device displays the second notification in either the first mode or the second mode includes: When the second application has the second notification, and the second electronic device obtains the second notification from the first electronic device, the second electronic device determines whether an identifier that is the same as a first identifier carried in the second notification is stored. When no identifier that is the same as the first identifier is stored, the second electronic device displays the second notification in the second mode, and stores the first identifier. When the second electronic device obtains the second notification from a server, the second electronic device determines whether the identifier that is the same as the first identifier carried in the second notification is stored. When the identifier that is the same as the first identifier is stored, the second electronic device skips displaying the second notification in the first mode.

When the second application has the second notification, and the second electronic device first receives the second notification from the first electronic device, in this case, the second electronic device does not store the identifier that is the same as the identifier carried in the second notification, and the second electronic device may display the second notification in the second mode, and store the identifier carried in the second notification.

The second electronic device further receives the second notification from the server. In this case, the second electronic device stores the identifier carried in the second notification, and the second electronic device may skip displaying the second notification in the first mode. This helps reduce a probability of repeatedly displaying the notification.

In a possible implementation, that when the second application has the second notification, the first electronic device displays the second notification in the first mode includes: When the second application has the second notification, the first electronic device determines whether the identifier that is the same as the first identifier carried in the second notification is stored; and when no identifier that is the same as the first identifier is stored, the first electronic device sends the second notification to the second electronic device, and displays the second notification in the first mode.

Before synchronizing the second notification with the second electronic device, the first electronic device may determine whether the identifier that is the same as the first identifier carried in the second notification is stored. If the identifier is stored, it indicates that a same notification has been received, and the first electronic device may not synchronize the second notification with the second electronic device. If the identifier is not stored, it indicates that the same notification has not been received, and the second electronic device may be synchronized. In an example, for the method, refer to S809 to S815 in FIG. 8B and FIG. 8C. In this way, a probability that devices synchronize the same notification with each other is reduced.

In a possible implementation, the method further includes: When the second application has a third notification, the first electronic device is not in a screen-locked state, and the second electronic device is in the screen-locked state, the first electronic device displays the third notification in the first mode, and the second electronic device skips displaying the third notification in the first mode or the second mode.

The first electronic device and the second electronic device establish the network with each other, and a notification of the second application may be displayed on only one device. When the first electronic device is not in the screen-locked state and the second electronic device is in the screen-locked state, the first electronic device displays the third notification, and the second electronic device skips displaying the third notification. In this way, a probability of repeated reminders on different devices is reduced.

In a possible implementation, before that the second electronic device skips displaying the third notification in the first mode or the second mode, the method further includes: The second electronic device receives, from the first electronic device, information indicating that the third notification has been displayed. That the second electronic device skips displaying the third notification in the first mode, and the second electronic device skips displaying the third notification in the second mode includes: In response to the information indicating that the third notification has been displayed, the second electronic device skips displaying the third notification in the first mode, and the second electronic device skips displaying the third notification in the second mode.

The first electronic device receives the third notification from the server, and detects that the first electronic device is not in the screen-locked state and the second electronic device is in the screen-locked state. The first electronic device may display the third notification, and send, to the second electronic device, the information indicating that the third notification has been displayed. In response to the information indicating that the third notification has been displayed, the second electronic device skips displaying the third notification.

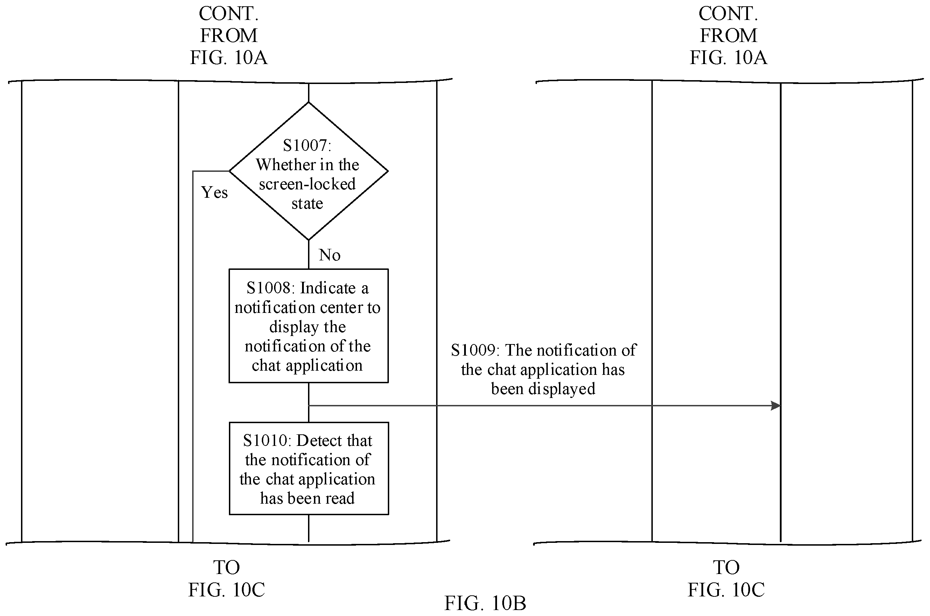

For the method, refer to S1007 to S1009 in FIG. 10B. In this way, the notification of the second application may be displayed on only one device, which helps reduce the probability of repeated reminders on different devices.

It may be understood that the second electronic device may synchronize, with the first electronic device, information indicating that the second electronic device is in the screen-locked state or is not in the screen-locked state, so that the notification of the second application may be displayed on only one device.

In a possible implementation, the method further includes: When the second application has a fourth notification, the first electronic device is in the screen-locked state, and the second electronic device is not in the screen-locked state, the first electronic device skips displaying the fourth notification in the first mode, and the second electronic device displays the fourth notification in either the first mode or the second mode.

The first electronic device receives the third notification from the server, and detects that the first electronic device is in the screen-locked state and the second electronic device is not in the screen-locked state. The first electronic device may skip displaying the fourth notification. The second electronic device may display the fourth notification in either the first mode or the second mode based on the foregoing method.

In this way, the notification of the second application may be displayed on only one device, and a probability of repeated reminders on a same device is reduced.

In a possible implementation, the method further includes: When the first electronic device detects that the second notification has been read, the first electronic device sends, to the second electronic device, information indicating that the second notification has been read; and the second electronic device skips displaying the second notification in response to the information indicating that the second notification has been read.

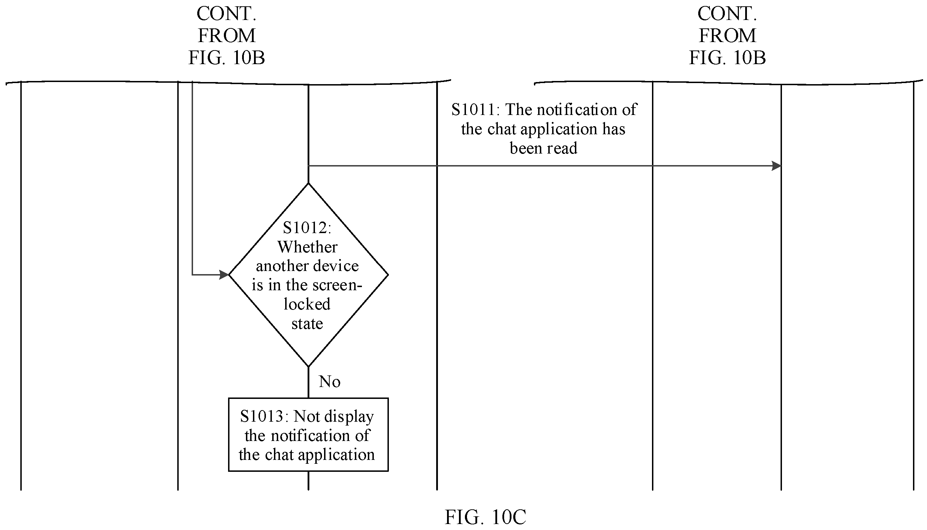

In an example, for the method, refer to S1010 and S1011 in FIG. 10B and FIG. 10C.

In this way, a user performs processing only once on one device, which helps reduce a probability that the user repeatedly processes a same notification.

In a possible implementation, the method further includes: When the first application has a fifth notification, the first electronic device skips displaying the fifth notification, and the second electronic device displays the fifth notification in the second mode, where a user using the second electronic device is a target user, and the target user is an owner of the first electronic device.

The user using the second electronic device is the target user, and the target user is the owner of the first electronic device. It may indicate that there is only one user using the second electronic device, namely, the owner. In this way, the second electronic device displays the fifth notification, and the first electronic device skips displaying the fifth notification. This helps implement that one notification is displayed on only one device while privacy of the owner is protected.

In a possible implementation, that when the first application has the fifth notification, the first electronic device skips displaying the fifth notification, and the second electronic device displays the fifth notification in the second mode includes: When the first application has the fifth notification, the first electronic device determines whether the target user is using the second electronic device, and if the target user is using the second electronic device, determines whether there is a user in addition to the target user using the second electronic device. When there is no user other than the target user using the second electronic device, the first electronic device skips displaying the fifth notification, and sends the fifth notification to the second electronic device. The second electronic device displays the fifth notification in the second mode.

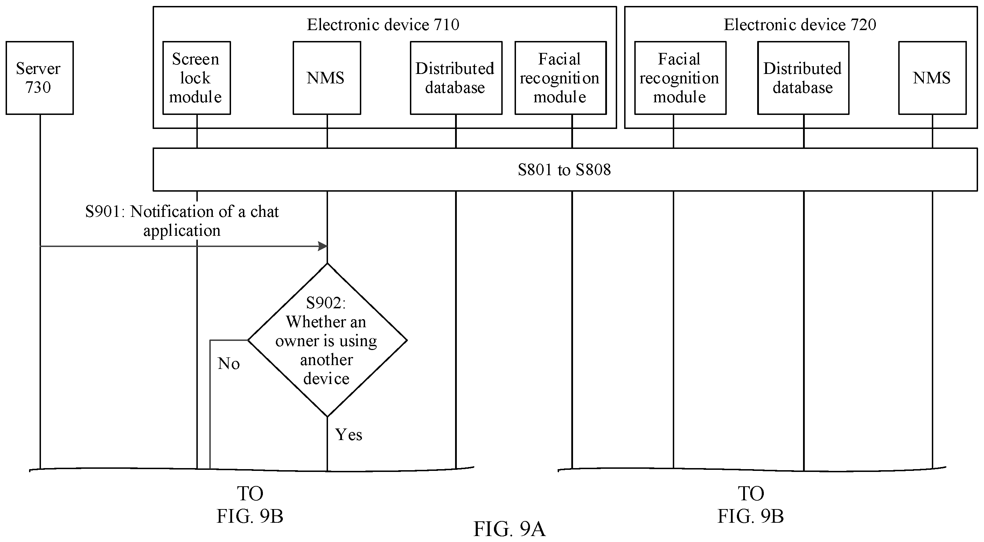

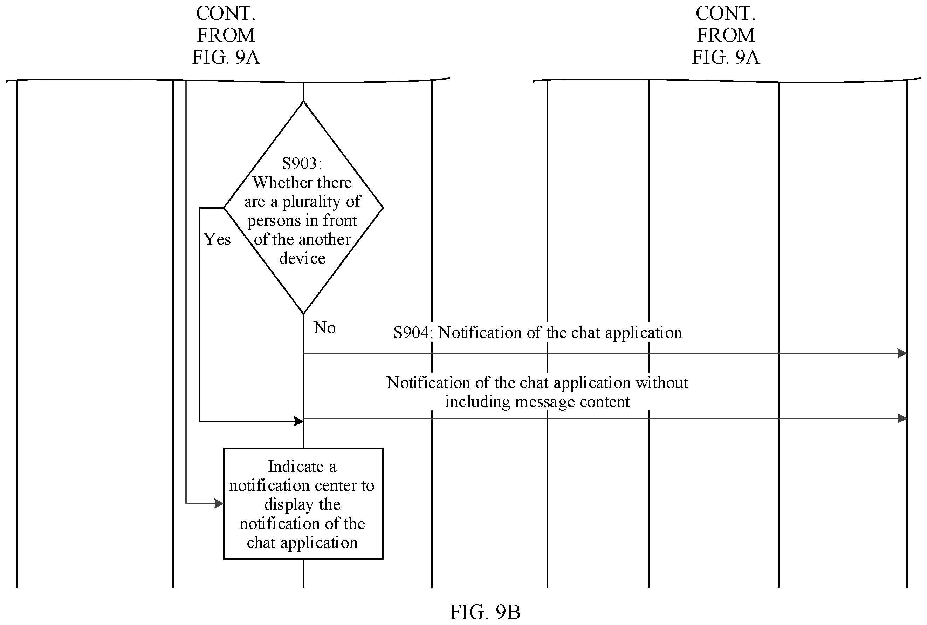

For the method, refer to the method shown in FIG. 9A and FIG. 9B. In this way, this helps implement that one notification is displayed on only one device while privacy of the owner is protected.

In a possible implementation, the method further includes: When there is a user in addition to the target user using the second electronic device, the first electronic device does not send message content associated with the fifth notification to the second electronic device. This helps protect privacy of the owner.

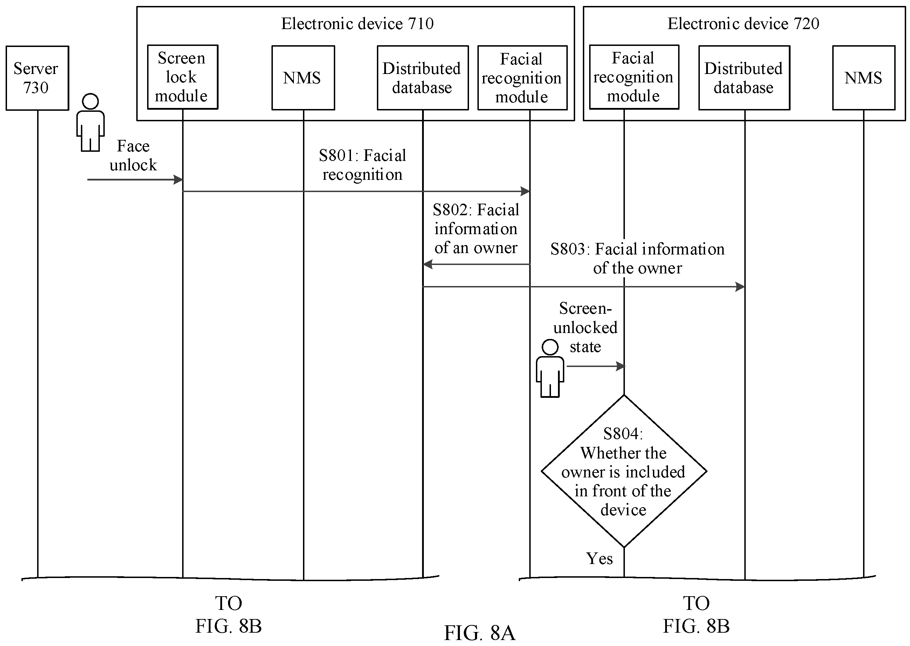

In a possible implementation, that the first electronic device determines whether the target user is using the second electronic device includes: When detecting that face unlock succeeds, the first electronic device obtains an image during face unlock, captures facial information in the image, and sends the facial information to the second electronic device. In response to the facial information, the second electronic device determines whether the user using the second electronic device is the target user; and when determining that the user using the second electronic device is the target user, the second electronic device sends, to the first electronic device, information indicating that the target user is using the second electronic device. The first electronic device stores, in a database, the information indicating that the target user is using the second electronic device; and the first electronic device determines, based on whether the information indicating that the target user is using the second electronic device is obtained from the database, whether the target user is using the second electronic device. For the method, refer to S801 to S808 in FIG. 8A and FIG. 8B.

In this way, the second electronic device can detect whether the user using the second electronic device is the owner.

In a possible implementation, the method further includes: The second electronic device detects user change information, where the user change information indicates that the user using the second electronic device is not the target user, or there is a user in addition to the target user using the second electronic device; and the second electronic device hides the fifth notification, or skips displaying message content associated with the fifth notification.

In this way, the second electronic device may change a display status of the notification based on a change of the user using the second electronic device. This helps protect privacy of the owner.

In a possible implementation, the method further includes: The second electronic device sends the user change information to the first electronic device; and when the second application has a sixth notification, the first electronic device skips sending the sixth notification to the second electronic device in response to the user change information.

The second electronic device may determine, based on the user change information, whether to synchronize the notification of the application. This helps implement notification synchronization while privacy of the owner is protected.

According to a second aspect, an embodiment of this application provides a notification processing method, applied to a second electronic device. The method includes: The second electronic device establishes a network with a first electronic device, where a second application is installed on both the first electronic device and the second electronic device, and a login account of the second application on the first electronic device is the same as a login account of the second application on the second electronic device. When the second application has a second notification, and the second electronic device obtains the second notification from a server, the second electronic device determines whether an identifier that is the same as a first identifier carried in the second notification is stored. When no identifier that is the same as the first identifier is stored, the second electronic device displays the second notification in a first mode, and stores the first identifier, where the first mode includes a notification display mode present when a message is obtained from the server. When the second electronic device obtains the second notification from the first electronic device, the second electronic device determines whether an identifier that is the same as a first identifier carried in the second notification is stored.

When the identifier that is the same as the first identifier is stored, the second electronic device skips displaying the second notification in a second mode, where the second mode includes a notification display mode present when a message or a notification is obtained from a networking device.

According to a third aspect, an embodiment of this application provides a notification processing method. The method may be applied to a communication system that includes a first electronic device and a second electronic device. The method includes: The first electronic device and the second electronic device establish a network with each other, where a first application and a second application are installed on the first electronic device; the first application is not installed on the second electronic device, or the first application is installed, but a login account of the first application on the second electronic device is different from a login account of the first application on the first electronic device; and when the first application has a fifth notification, the first electronic device skips displaying the fifth notification, and the second electronic device displays the fifth notification, where a user using the second electronic device is a target user, and the target user is an owner of the first electronic device.

In a possible implementation, that when the first application has the fifth notification, the first electronic device skips displaying the fifth notification, and the second electronic device displays the fifth notification includes: When the first application has the fifth notification, the first electronic device determines whether the target user is using the second electronic device, and if the target user is using the second electronic device, determines whether there is a user in addition to the target user using the second electronic device. When there is no user other than the target user using the second electronic device, the first electronic device skips displaying the fifth notification, and sends the fifth notification to the second electronic device; and the second electronic device displays the fifth notification.

In a possible implementation, the method further includes: When there is a user in addition to the target user using the second electronic device, the first electronic device does not send message content associated with the fifth notification to the second electronic device.

In a possible implementation, that the first electronic device determines whether the target user is using the second electronic device includes: When detecting that face unlock succeeds, the first electronic device obtains an image during face unlock, captures facial information in the image, and sends the facial information to the second electronic device. In response to the facial information, the second electronic device determines whether the user using the second electronic device is the target user; and when determining that the user using the second electronic device is the target user, the second electronic device sends, to the first electronic device, information indicating that the target user is using the second electronic device. The first electronic device stores, in a database, the information indicating that the target user is using the second electronic device; and the first electronic device determines, based on whether the information indicating that the target user is using the second electronic device is obtained from the database, whether the target user is using the second electronic device.

In a possible implementation, the method further includes: The second electronic device detects user change information, where the user change information indicates that the user using the second electronic device is not the target user, or there is a user in addition to the target user using the second electronic device; and the second electronic device hides the fifth notification, or skips displaying message content associated with the fifth notification.

In a possible implementation, the method further includes: The second electronic device sends the user change information to the first electronic device; and when the second application has a sixth notification, the first electronic device skips sending the sixth notification to the second electronic device in response to the user change information.

According to a fourth aspect, an embodiment of this application provides a notification processing apparatus. The notification processing apparatus may be an electronic device, or may be a chip or a chip system in an electronic device. The notification processing apparatus may include a processing module, a display module, and a transceiver module. When the notification processing apparatus is the electronic device, the processing module may be a processing unit. The processing unit is configured to perform steps of the processing module, so that the electronic device implements the notification processing method according to any one of the first aspect or the possible implementations of the first aspect. When the notification processing apparatus is the electronic device, the processing module may be a processor. The notification processing apparatus may further include a storage unit, and the storage unit may be a memory. The storage unit is configured to store instructions, and the processing module executes the instructions stored in the storage unit, so that the electronic device implements the notification processing method according to any one of the first aspect or the possible implementations of the first aspect. When the notification processing apparatus is the chip or the chip system in the electronic device, the processing module may be a processor. The processing module executes instructions stored in a storage unit, so that the electronic device implements the notification processing method according to any one of the first aspect or the possible implementations of the first aspect. The storage unit may be a storage unit (for example, a register or a cache) in the chip, or may be a storage unit (for example, a read-only memory or a random access memory) that is in the electronic device and that is outside the chip.

For example, the processing module is configured to establish a network with a first electronic device, where a second application is installed on both the first electronic device and a notification processing apparatus, and a login account of the second application on the first electronic device is the same as a login account of the second application on the notification processing apparatus. When the second application has a second notification, the transceiver module is configured to obtain the second notification from a server. The processing module is further configured to determine whether an identifier that is the same as a first identifier carried in the second notification is stored. The display module is configured to: when the identifier that is the same as the first identifier is not stored, display the second notification in a first mode; and the processing module is further configured to: store the first identifier, where the first mode includes a notification display mode present when a message is obtained from the server; when obtaining the second notification from the first electronic device, determine whether the identifier that is the same as the first identifier carried in the second notification is stored; and when the identifier that is the same as the first identifier is stored, skip displaying the second notification in a second mode, where the second mode includes a notification display mode present when a message or a notification is obtained from a networking device.

According to a fifth aspect, an embodiment of this application provides an electronic device, including one or more processors and a memory. The memory is coupled to the one or more processors, the memory is configured to store computer program code, the computer program code includes computer instructions, and the one or more processors invoke the computer instructions, so that the electronic device performs the method according to any one of the second aspect or the possible implementations of the second aspect.

According to a sixth aspect, an embodiment of this application provides a computer-readable storage medium. The computer-readable storage medium stores a computer program or instructions. When the computer program or the instructions are run on an electronic device, the electronic device is enabled to perform the method according to any one of the second aspect or the possible implementations of the second aspect.

According to a seventh aspect, an embodiment of this application provides a computer program product. The computer program product includes computer program code, and when the computer program code is run on an electronic device, the electronic device is enabled to perform the method according to any one of the second aspect or the possible implementations of the second aspect.

According to an eighth aspect, this application provides a chip or a chip system. The chip or the chip system is used in an electronic device, the chip or the chip system includes at least one or more processors, and the one or more processors are configured to invoke computer instructions to perform the method according to any one of the second aspect or the possible implementations of the second aspect.

In a possible implementation, the chip or the chip system described above in this application further includes at least one memory, and the at least one memory stores instructions. The memory may be a storage unit in the chip, for example, a register or a cache, or may be a storage unit (for example, a read-only memory or a random access memory) of the chip.

It should be understood that the second aspect to the eighth aspect of this application correspond to the technical solutions of the first aspect of this application, and beneficial effect achieved by the aspects and the corresponding feasible implementations are similar. Details are not described again.

### BRIEF DESCRIPTION OF DRAWINGS

FIG. 1A and FIG. 1B are a diagram of interfaces for implementing notification synchronization through a "super home screen" function according to an embodiment of this application;
FIG. 2A and FIG. 2B are a diagram of interfaces for implementing notification synchronization through multi-screen collaboration according to an embodiment of this application;
FIG. 3 is a diagram of an interface with repeated notification reminders according to an embodiment of this application;
FIG. 4 is a diagram of a communication system according to an embodiment of this application;
FIG. 5 is a diagram of a hardware structure of an electronic device according to an embodiment of this application;
FIG. 6 is a diagram of a software architecture of an electronic device according to an embodiment of this application;
FIG. 7 is a diagram of a communication system applicable to an embodiment of this application;
FIG. 8A to FIG. 10C are module interaction diagrams of a notification processing method according to an embodiment of this application;
FIG. 11 is a schematic flowchart of a notification processing method according to an embodiment of this application; and
FIG. 12 is a diagram of a structure of a chip according to an embodiment of this application.

### DESCRIPTION OF EMBODIMENTS

The following describes technical solutions of this application with reference to accompanying drawings.

To better understand embodiments of this application, terms provided in embodiments of this application are first described.

### 1. Notification

The notification is a system-level prompt or alarm displayed on an electronic device, and is used to remind a user of occurrence of specific time or a status. In some examples, the notification may be used to notify that the electronic device receives a message of an installed application.

### 2. Notification synchronization

The notification synchronization may also be referred to as cross-device notification, that is, a same notification is reminded on different devices.

### 3. Cockpit

The cockpit is a vehicle-mounted system that can implement intelligent control and management of devices in a vehicle through an operation interface and a plurality of human-machine interaction manners (such as a touchscreen, voice control, and gesture recognition).

### 4. Multi-screen collaboration

The multi-screen collaboration indicates that resource sharing and collaborative operations can be implemented between a plurality of devices. For example, a mobile phone, a tablet computer, and a computer are connected together, and the mobile phone, the tablet computer, and the computer may share a resource, for example, a file, an image, and a video. That is, resources such as the file, the image, and the video may be seamlessly synchronized or shared between the several devices. A collaborative operation may be further implemented between the mobile phone, the tablet computer, and the computer. For example, a keyboard and a mouse of the computer may control an operation of the mobile phone or the tablet computer, and a display of the computer may be used as an extended display of the mobile phone.

### 5. Super device

The super device indicates collaborative working between a plurality of devices. With the super device, a user can connect different devices (such as mobile phones, tablet computers, computers, and smart screens) to implement seamless interconnection.

### 6. Other terms

In embodiments of this application, the terms "first", "second", and the like are used to distinguish between same items or similar items that have basically same functions and purposes. For example, a first notification and a second notification are merely used to distinguish between different notifications, and a sequence of the first notification and the second notification is not limited. A person skilled in the art may understand that the terms such as "first" and "second" do not limit a quantity or an execution sequence, and the terms such as "first" and "second" do not indicate a definite difference.

It should be noted that, in embodiments of this application, the word "example" or "for example" is used to represent giving an example, an illustration, or a description. Any embodiment or design scheme described as an "example" or "for example" in this application should not be explained as being more preferred or having more advantages than another embodiment or design scheme. To be precise, use of the word such as "example" or "for example" is intended to present a relative concept in a specific manner.

In embodiments of this application, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

### 7. Electronic device

The electronic device in embodiments of this application may include a hand-held device, a vehicle-mounted device, or the like that has a wireless communication function. For example, some electronic devices are: mobile phones (mobile phones), tablet computers, palmtop computers, notebook computers, mobile internet devices (mobile internet device, MID), wearable devices, virtual reality (virtual reality, VR) devices, augmented reality (augmented reality, AR) devices, wireless terminals in industrial control (industrial control), wireless terminals in self-driving (self-driving), wireless terminals in remote medical surgery (remote medical surgery), wireless terminals in a smart grid (smart grid), wireless terminals in transportation safety (transportation safety), wireless terminals in a smart city (smart city), wireless terminals in a smart home (smart home), cellular phones, cordless phones, session initiation protocol (session initiation protocol, SIP) phones, wireless local loop (wireless local loop, WLL) stations, personal digital assistants (personal digital assistant, PDA), hand-held devices having a wireless communication function, compute devices or other processing devices connected to a wireless modem, vehicle-mounted devices, wearable devices, electronic devices in a 5G network, or electronic devices in a future evolved public land mobile network (public land mobile network, PLMN). This is not limited in embodiments of this application.

As an example instead of a limitation, in embodiments of this application, the electronic device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that are dedicated to only one type of application function and need to work with other devices such as smartphones, such as various smart bands or smart jewelry for monitoring physical signs.

The electronic device in embodiments of this application may also be referred to as a terminal device, user equipment (user equipment, UE), a mobile station (mobile station, MS), a mobile terminal (mobile terminal, MT), an access terminal, a subscriber unit, a subscriber station, a mobile station, a mobile console, a remote station, a remote terminal, a mobile device, a user terminal, a terminal, a wireless communication device, a user agent, a user apparatus, or the like.

With the development of terminal technologies, notification synchronization may be implemented between a plurality of electronic devices. In different scenarios, methods for implementing notification synchronization may be different. The following describes the notification synchronization methods in two different scenarios.

In some scenarios, notification synchronization may be implemented between different electronic devices through a "super home screen" function. For example, FIG. 1A and FIG. 1B are a diagram of implementing notification synchronization through the "super home screen" function. As shown in FIG. 1A and FIG. 1B, a communication system includes a mobile phone 110 and a vehicle 120. The vehicle 120 includes a cockpit. The mobile phone 110 may include the "super home screen" function. The mobile phone 110 may be connected to the cockpit in the vehicle 120 through the "super home screen" function.

After the mobile phone 110 is paired with the vehicle 120 through the "super home screen" function, the vehicle 120 may include a part of applications in the mobile phone 110. The part of applications are applications that the mobile phone 110 allows to implement notification synchronization, for example, a chat application, a music application, and a memo application. When receiving notifications of these applications, the mobile phone 110 may send the notifications to the vehicle 120, and the vehicle 120 may display the notifications in the cockpit or give reminders of the notifications through reminders (for example, pop-up windows, sound, or vibration).

In some examples, the cockpit may display the notifications in a notification center, as shown in an interface a in FIG. 1B. It can be learned from FIG. 1B that the notification center includes a vehicle notification and an application notification. The vehicle notification is a notification of the cockpit. The application notification is a notification received by the cockpit from the mobile phone 110.

In some other examples, as shown in FIG. 1A, the mobile phone 110 receives a notification of the chat application, and the mobile phone 110 gives a reminder of the notification through a pop-up window. Content of the notification is "Meeting at 3:00 tomorrow". The mobile phone 110 may send the notification to the cockpit in the vehicle 120 through the super home screen function. The cockpit in the vehicle 120 may display the notification, and may give the reminder of the notification through a pop-up window shown in an interface b in FIG. 1B. A representation form in which the cockpit in the vehicle 120 displays the notification may be different from a representation form in which the mobile phone 110 displays the notification.

In this way, the cockpit in the vehicle 120 may receive the notification of the mobile phone 110, so that a user can view the notification when driving.

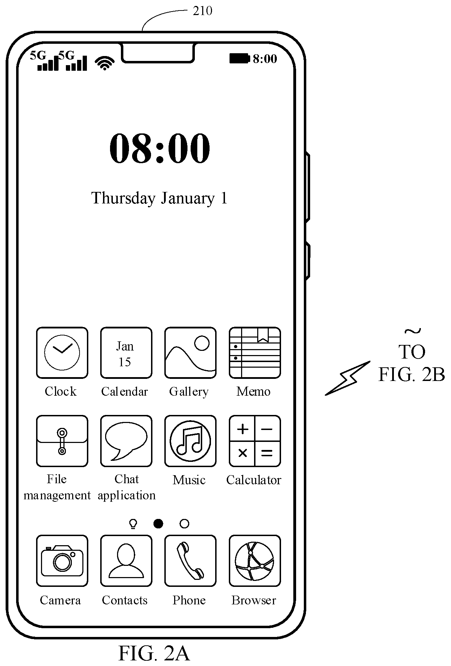

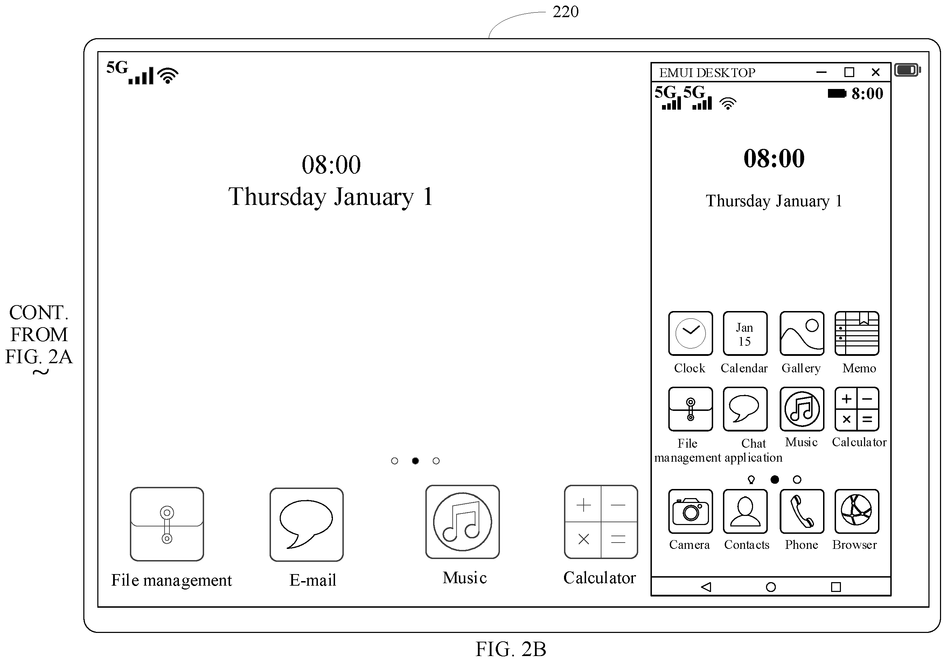

In some other scenarios, notification synchronization may be implemented between different electronic devices through multi-screen collaboration. FIG. 2A and FIG. 2B are a diagram of implementing notification synchronization through multi-screen collaboration. As shown in FIG. 2A and FIG. 2B, a communication system includes a mobile phone 210 and a tablet computer (pad) 220. The mobile phone 210 and the tablet computer 220 may implement multi-screen collaboration.

After the mobile phone 210 and the tablet computer 220 implement multi-screen collaboration, a display interface of the tablet computer 220 may be shown in FIG. 2B. The tablet computer 220 may display an interface of the mobile phone 210.

After receiving a notification of a chat application, the mobile phone 210 may send the notification to the tablet computer 220 through a multi-screen collaboration function, and the tablet computer 220 may display the notification in a notification center of the tablet computer 220.

In some examples, a PC assistant module is deployed in both the mobile phone 210 and the tablet computer 220. After the mobile phone 210 receives the notification of the chat application, the PC assistant module in the mobile phone 210 may send the notification to the PC assistant module in the tablet computer 220, and the tablet computer 220 may display the notification in the notification center of the tablet computer 220. The PC assistant module is configured to implement notification synchronization between devices. The name is merely an example. This is not limited in embodiments of this application.

The following problems may exist when notification synchronization is implemented between a plurality of electronic devices:
1. If same applications are deployed in a plurality of electronic devices, and accounts logged in to the applications in all the electronic devices are the same, the applications in all the electronic devices receive notifications. If notification synchronization is still implemented between the electronic devices, a same device may receive the notification twice, causing repeated display or reminders, and affecting user experience.

For example, in the scenario shown in FIG. 2A and FIG. 2B, if the tablet computer 220 includes the chat application, and an account logged in to the chat application on the tablet computer 220 is the same as that of the chat application on the mobile phone 210, both the chat application on the tablet computer 220 and the chat application on the mobile phone 210 receive the notification. If the mobile phone 210 sends the notification to a control center of the tablet computer 220, there are two same notifications in the control center of the tablet computer 220. For example, the control center of the tablet computer 220 may be shown in FIG. 3. It can be learned from FIG. 3 that there are two same notifications in the control center of the tablet computer 220, and notification content is "Meeting at 3:00 tomorrow".

2. A plurality of electronic devices include a personal device and a shared device. If the personal device synchronizes a notification with the shared device, there is a risk of privacy leakage. The personal device is generally used by one person, for example, a mobile phone. The shared device may be shared by a plurality of persons, for example, a tablet computer and a computer. In embodiments of this application, a user who uses the personal device is referred to as an owner. The name is merely an example, and this is not limited in embodiments of this application.

For example, notification synchronization may be implemented between the mobile phone, the tablet computer, and the computer. For example, an application notification of the mobile phone is synchronized with the tablet computer and the computer. At home, the owner uses the mobile phone, a son of the owner uses the tablet computer, and a partner of the owner uses the computer. If the application notification of the mobile phone is synchronized with the tablet computer and the computer, both the son and the partner of the owner can view the notification, resulting in privacy leakage of the owner.

In view of this, an embodiment of this application provides a notification processing method and processing apparatus, to resolve the foregoing problem by using the following technical means.
1. A same notification of a same application corresponds to a same identifier. After receiving a notification from an application of a second electronic device, a first electronic device determines whether the first electronic device includes a notification with a same identifier, and if the notification with the same identifier exists, does not give a reminder of the notification or does not display the notification. In this way, a probability of repeated reminders is reduced, thereby improving user experience.
2. The first electronic device may receive, from the second electronic device, information indicating whether an owner is using the device and a quantity of users using the second electronic device, and when determining that the owner is using the second electronic device and there is only one user using the second electronic device, synchronize the notification with the second electronic device being used by the owner. In this way, privacy of the owner is protected when the notification is synchronized, and a risk of privacy leakage is reduced.

The method provided in embodiments of this application may be applicable to an electronic device that supports wireless communication, for example, a device like a mobile phone or a tablet computer. For ease of understanding, the electronic device provided in embodiments of this application is first described.

To better understand embodiments of this application, a communication system applicable to embodiments of this application is first described.

For example, FIG. 4 is a diagram of a communication system according to an embodiment of this application. As shown in FIG. 4, the communication system may include a server 400, a mobile phone 410, a tablet computer 420, smart glasses 430, a Bluetooth headset 440, a smart watch 450, a smart screen 460, a cockpit in a vehicle 470, a Bluetooth speaker 480, and a notebook computer 490.

A trusted relationship may be established between the mobile phone 410 and one or more devices of the tablet computer 420, the smart glasses 430, the Bluetooth headset 440, the smart watch 450, the smart screen 460, the cockpit in the vehicle 470, the Bluetooth speaker 480, and the notebook computer 490, and data may be transmitted over a short distance. In an example, different devices may establish a trusted relationship by connecting to a same network and/or logging in to a same account. This is not limited in embodiments of this application.

The communication system may include more or fewer devices shown in FIG. 4. For example, the communication system may include two or more devices. A specific quantity of devices included in the communication system is not limited in embodiments of this application.

Notification synchronization can be implemented between the devices that establish the trusted relationship. The server 400 is configured to receive a notification of an application, and transmit the notification of the application to a device on which the application is deployed. If a device has a notification synchronization function, the device can synchronize the notification of the application with another device with which the device establishes the trusted relationship.

For example, the mobile phone 410, the tablet computer 420, and the smart watch 450 establish the trusted relationship, and the mobile phone 410 has a function of synchronizing the synchronize with the tablet computer 420 and the smart watch 450. The server 400 receives the notification that is of the application and that is sent by a server of the application, and sends the notification of the application to the mobile phone 410. The mobile phone 410 receives the notification of the application, and may synchronize the notification with the tablet computer 420 and the smart watch 450. A user may view the notification on the smart watch 450 or the tablet computer 420.

If the tablet computer 420 also includes the application, the tablet computer 420 may receive the notification of the application from the server 400, or may receive the notification from the mobile phone 410. The tablet computer 420 may display a first received notification, and does not display a same notification received later.

For example, the tablet computer 420 receives the notification of the application from the mobile phone 410, may store an identifier of the notification, and determine whether an identifier that is the same as the identifier of the notification exists. If no identifier that is the same as the identifier of the notification exists, it indicates that a notification from the server 400 has not been received. The tablet computer 420 may display the notification.

When the notification from the server 400 is received, an identifier of the notification may be stored, and whether an identifier that is the same as the identifier of the notification exists may be determined. Because the same identifier has been stored previously, the tablet computer 420 has the identifier that is the same as the identifier of the notification. The tablet computer 420 may not display and receive the notification from the mobile phone 410. For example, on the interface shown in FIG. 3, the interface may not include the notification that is about the chat application and that is received through the multi-screen collaboration function.

The tablet computer 420 is a shared device, and the smart watch 450 is a personal device. The mobile phone 410 receives the notification of the application, and may synchronize the notification with the personal device like the smart watch 450. The mobile phone 410 receives the notification of the application, and may determine whether an owner is using the shared device. If the owner is using the shared device, and only the owner is using the shared device, the mobile phone 410 may synchronize the notification with the shared device like the tablet computer 420. In this way, privacy of the owner is protected when the notification is synchronized.

It should be noted that the tablet computer 420 is used as an example for description in this embodiment of this application. Other devices are similar. Details are not described herein again.

To better understand embodiments of this application, the following describes an electronic device applicable to embodiments of this application.

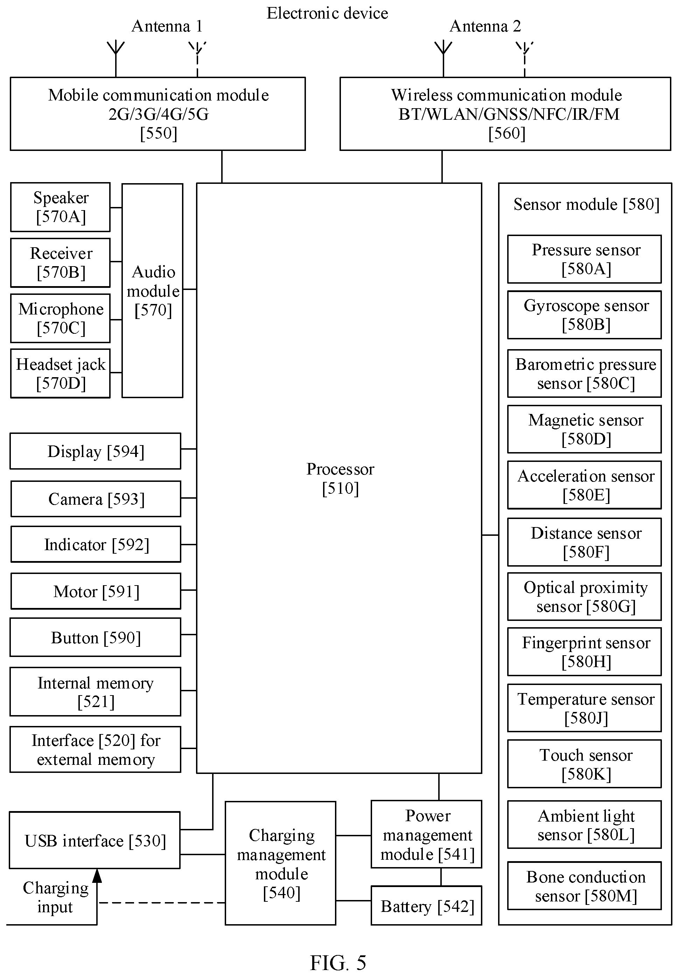

For example, FIG. 5 is a diagram of a hardware structure of an electronic device according to an embodiment of this application. As shown in FIG. 5, the electronic device may include a processor 510, an interface 520 for external memory, an internal memory 521, a universal serial bus (universal serial bus, USB) interface 530, a charging management module 540, a power management module 541, an antenna 1, an antenna 2, a mobile communication module 550, a wireless communication module 560, an audio module 570, a speaker 570A, a receiver 570B, a microphone 570C, a headset jack 570D, a sensor module 580, a button 590, a motor 591, an indicator 592, a camera 593, a display 594, and the like.

Optionally, the sensor module 580 may include a pressure sensor 580A, a gyroscope sensor 580B, a barometric pressure sensor 580C, a magnetic sensor 580D, an acceleration sensor 580E, a distance sensor 580F, an optical proximity sensor 580G, a fingerprint sensor 580H, a temperature sensor 580J, a touch sensor 580K, an ambient light sensor 580L, a bone conduction sensor 580M, and the like.

It may be understood that the structure shown in this embodiment of this application does not constitute a specific limitation on the electronic device. In some other embodiments of this application, the electronic device may include more or fewer components than those shown in the figure, or combine some components, or split some components, or have different component arrangements. The components shown in the figure may be implemented by hardware, software, or a combination of software and hardware.

The camera 593 may include one or more of a low-power camera, a standard camera, a telephoto camera, or an ultra-wide-angle camera. If the camera 593 includes the low-power camera, the low-power camera indicates that the camera operates in a low-power mode. The low-power camera may be kept always on. In some scenarios, an image captured by the low-power camera may be used to determine a quantity of persons in front of the device and determine whether the persons in front of the device include an owner. In some other scenarios, the image captured by the low-power camera may be further used to determine, in a face unlock scenario, whether a person in front of the device is the owner.

The wireless communication module 560 may implement wireless communication with another device.

In an unlock scenario, the processor 510 may capture an image by using the camera 593. If a face in the image matches a face of the owner, unlock succeeds. If the electronic device and another electronic device establish a trusted relationship, after face unlock succeeds, the processor 510 may indicate the wireless communication module 560 to transmit facial information used in face unlock success to the another electronic device, so that the another electronic device determines whether a user using the device is the owner.

In a possible implementation, the processor 510 has a function of synchronizing a synchronize with another device through the wireless communication module 560.

For example, the processor 510 receives a notification of an application from a server through the wireless communication module 560, and may determine whether an identifier that is the same as an identifier of the notification exists. If the identifier exists, the notification may not be displayed or a reminder of the notification may not be given. This helps reduce a probability of repeatedly displaying the notification.

Optionally, if no identifier that is the same as the identifier of the notification exists, the processor 510 may determine whether the device is in a screen-locked state. If the device is in the screen-locked state, it indicates that the device is in an unused state. The processor 510 may send the notification to another electronic device through the wireless communication module 560, so that the user views the notification on the another device.

It may be understood that if the processor 510 is not in the screen-locked state, it indicates that the device is being used, and the processor 510 may not send the notification to another electronic device through the wireless communication module 560. In this way, the user does not need to process the notification again on the another device, thereby reducing a probability of disturbing the user.

Optionally, to avoid leaking privacy of the owner, the processor 510 may determine whether the owner is using another device and a quantity of users using the another device, and if the owner is using the another device, and there is only one user using the device, synchronize the notification with the another device through the wireless communication module 560.

A distributed system, for example, HarmonyOS (HarmonyOS) or iOS, may be deployed in the electronic device provided in embodiments of this application. In embodiments of this application, an example in which the HarmonyOS is deployed in the electronic device is used to describe a software architecture of the electronic device.

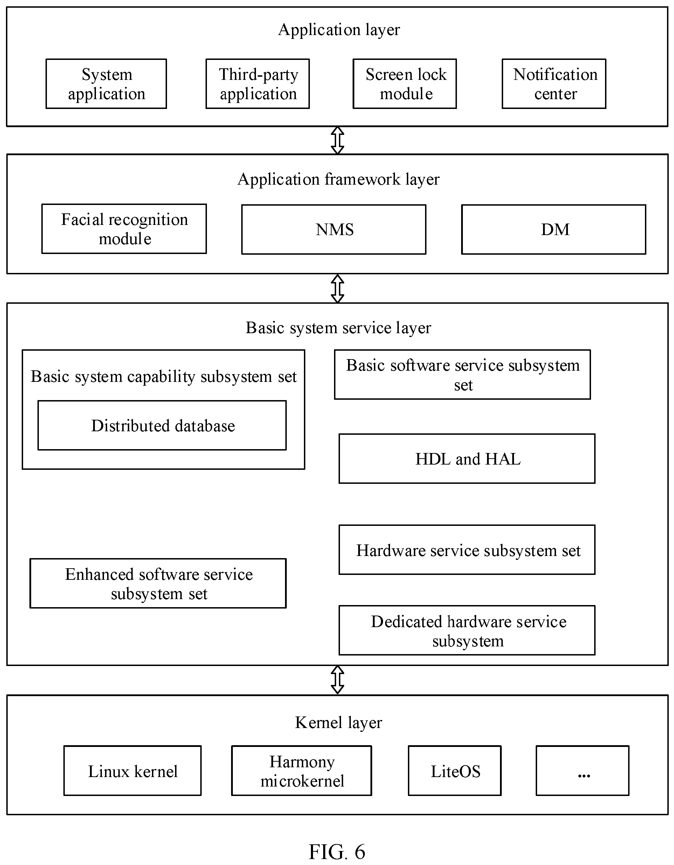

For example, FIG. 6 is a diagram of a software architecture of the electronic device according to an embodiment of this application. As shown in FIG. 6, the HarmonyOS is a layered architecture. In the layered architecture, the HarmonyOS is divided into several layers, and each layer has a clear role and task. The layers communicate with each other through a software interface. In some embodiments, the HarmonyOS may be divided into four layers: an application (application) layer, an application framework (application framework) layer, a basic system service layer, and a kernel (kernel) layer from top to bottom.

The application layer may include a system application and a third-party application. For example, the application layer may include applications such as Memo, Camera, Gallery, Calendar, Phone, Map, WLAN, Bluetooth, Music, Videos, and Messages. The application layer may further include a notification center and a screen lock module. The notification center is used to display a notification, and is responsible for reminding, displaying, and reading of a notification. The screen lock module is configured to be responsible for face authentication.

The application framework layer provides an application of the HarmonyOS with a user program framework and a meta-capability framework for a plurality of languages, such as Java, C, C++, and JavaScript, as well as multi-language framework application programming interfaces (application programming interfaces, APIs) with various open software and hardware services. The application framework layer includes some predefined functions. As shown in FIG. 6, the application framework layer may include a facial recognition module (swing), a notification management system (notification management system, NMS), a device manager (device manager, DM), and the like. The facial recognition module may be configured to capture a face image in an image used in unlock success. The NMS is responsible for managing a life cycle of a notification. For example, the NMS is responsible for notification receiving, notification reminding, notification de-duplication, notification subscription, setting information storage, and notification deletion. The DM is responsible for processing device status information. For example, the DM is responsible for monitoring an unlock status of the device, writing the unlock status into a distributed database, and synchronizing the synchronize with another device.

The basic system service layer is a core capability set of the HarmonyOS, and supports the HarmonyOS in providing a service for an application service through the framework layer in a multi-device deployment scenario. As shown in FIG. 6, the layer may include a basic system capability subsystem set, a basic software service subsystem set, a basic software service subsystem set, a Harmony driver framework (HDF), a hardware abstraction layer (HAL), and a dedicated hardware service subsystem.

The basic system capability subsystem set provides a basic capability for an operation such as running, scheduling, or migration of a distributed application on a plurality of devices provided with the HarmonyOS, and includes a distributed soft bus, distributed data management and file management, distributed task scheduling, Ark runtime, distributed security and privacy protection, and the like.

The basic software service subsystem set provides common and general software services for the HarmonyOS, and includes subsystems such as graphics and images, distributed media, distributed artificial intelligence (artificial intelligence, AI), multi-mode input, multicast source discovery protocols (multicast source discovery protocol, MSDP) and digital videos (digital video, DV), event notification, phone services, and distributed designs for X (design for X, DFX). The basic software service subsystem set may be tailored based on deployment environments of different device forms. Each subsystem may be tailored internally at a granularity of a function. In this embodiment of this application, the basic software service subsystem set may further include a distributed database. The distributed database may also be referred to as distributed storage and data management. This is not limited in embodiments of this application. The distributed database may be used to synchronize data to another electronic device when data in the database changes. The data in the database may include: notification data, notification setting data, notification status data, device lock status information, an identifier of a notification, and the like.

An enhanced software service subsystem set provides differentiated enhanced software services for different devices in the HarmonyOS, and includes subsystems such as tablet computer service software, smart screen service software, head unit service software, and internet of things (internet of things, IoT) service software. The enhanced software service subsystem set may be tailored at a granularity of a subsystem based on deployment environments of different device forms. Each subsystem may also be tailored internally at a granularity of a function.

The HDF and the HAL are the basis of the HarmonyOS hardware ecosystem openness, provide hardware capability abstraction upward for hardware, and provide development frameworks and running environments downward for various peripheral drivers.

The hardware service subsystem set provides a common and adaptive hardware service for the HarmonyOS, and includes hardware service subsystems such as a pan-sensor service, a position service, a power supply service, a USB service, and a biometric recognition service. The hardware service subsystem set may be tailored based on deployment environments of different device forms. Each subsystem may be tailored internally at a granularity of a function.

The dedicated hardware service subsystem provides, for the HarmonyOS, differentiated hardware services for different devices, and may include subsystems such as a tablet computer dedicated hardware service, a head unit dedicated hardware service, a wearable dedicated hardware service, and an IoT dedicated hardware service. The dedicated hardware service subsystem may be tailored at a granularity of a subsystem. Each subsystem may be tailored internally at a granularity of a function.

The HarmonyOS uses a multi-kernel design. In this way, the kernel layer may include a Linux kernel, a Harmony microkernel, and LiteOS. Through this design, appropriate system kernels can be selected for devices with different device capabilities. The kernel layer further includes a kernel abstraction layer (Kernel Abstraction Layer) that provides basic kernel capabilities for another Harmony layer, such as process management, thread management, memory management, file system management, network management, and peripheral management.

To better understand embodiments of this application, the following specifically describes, with reference to specific scenarios, the method provided in embodiments of this application.

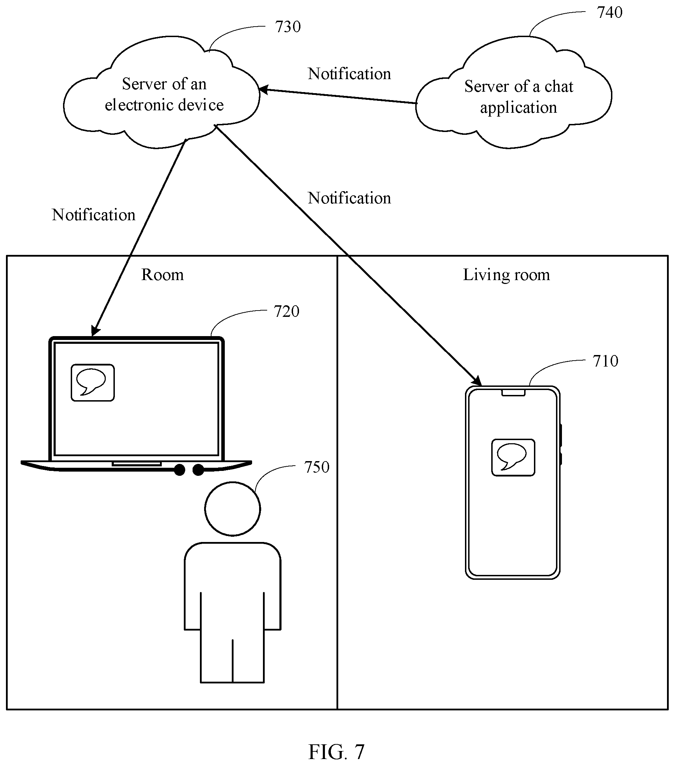

For example, FIG. 7 is a diagram of a communication system. The communication system includes an electronic device 710, an electronic device 720, a server 730 of the electronic devices, and a server 740 of a chat application. A position of the electronic device 710 is in a living room, a position of the electronic device 720 is in a room, and a user 750 works by using the electronic device 720. The user 750 may also be referred to as an owner. This is not limited in embodiments of this application. In some examples, the server 730 may be referred to as a push cloud.

The electronic device 710 and the electronic device 720 establish a trusted relationship, and may perform near field communication. The server 730 is configured to receive a notification transmitted to the electronic device 710 and/or the electronic device 720, and send the notification to the electronic device 710 and/or the electronic device 720. The server 740 may send the notification to a device on which the chat application is installed. The chat application is installed on both the electronic device 710 and the electronic device 720, and both the electronic device 710 and the electronic device 720 log in to an account of the user 750.

After the electronic device 710 and the electronic device 720 establish the trusted relationship, the electronic device 710 may send facial information of the user 750 to the electronic device 720 after face unlock succeeds. After receiving the facial information, the electronic device 720 may detect, in an unlocked state, whether a user using the electronic device 720 is the user 750.

The electronic device 710 may consider a user who can successfully perform face unlock as the user 750. To prevent cases in which two or more users can successfully perform face unlock, the electronic device 710 may send the facial information to the electronic device 720 each time after face unlock succeeds.

After the electronic device 710 and the electronic device 720 establish the trusted relationship, the electronic device 720 may send, to the electronic device 710, whether the electronic device 710 is in the screen-locked state. For example, if the electronic device 720 is not in the screen-locked state, the electronic device 720 may send, to the electronic device 710, information indicating that the electronic device 720 is not in the screen-locked state. In the screen-locked state, the electronic device 720 may send, to the electronic device 710, information indicating that the electronic device 720 is in the screen-locked state.

If the electronic device 720 is not in the screen-locked state, the electronic device 720 may capture an image in front of the device by using a camera, and determine whether facial information in the image belongs to the user 750. If the facial information belongs to the user 750, the electronic device 720 may transmit, to the electronic device 710, information indicating that the user 750 is using the electronic device 720.

When the account of the user 750 has a notification, the server 740 may send the notification to the server 730. The notification may include device information of the electronic device 710 and device information of the electronic device 720. The server 730 may separately send the notification to the electronic device 710 and the electronic device 720 based on the device information of the electronic device 710 and the device information of the electronic device 720. The notification carries a same identifier. In some examples, the identifier may be represented as AppMessageId. It may be understood that the identifier is merely an example. This is not limited in embodiments of this application.

In some examples, the server 740 may send the notification to the server 730. The notification may include the device information of the electronic device 710, the device information of the electronic device 720, and AppMessageId. The server 730 may separately send the notification to the electronic device 710 and the electronic device 720 based on the device information of the electronic device 710 and the device information of the electronic device 720. The notification carries AppMessageId.

In this way, the server 730 receives one piece of AppMessageId and directly forwards AppMessageId. In comparison with a method of generating one piece of AppMessageId based on two pieces of AppMessageId, this helps save computational power of the server 730.

In some other examples, the server 740 may send the notification to the server 730. The notification may include the device information of the electronic device 710 and AppMessageId 1, and the device information of the electronic device 720 and AppMessageId 2. The device information of the electronic device 710 corresponds to AppMessageId 1, and the device information of the electronic device 720 corresponds to AppMessageId 2.

The server 730 may generate AppMessageId 3 based on AppMessageId 1 and AppMessageId 2, and separately send the notification to the electronic device 710 and the electronic device 720. The notification carries AppMessageId 3.

In this way, the server 740 receives two pieces of AppMessageId, generates one piece of AppMessageId based on the two pieces of AppMessageId, and sends AppMessageId to the electronic device 710 and the electronic device 720. The server 730 does not need to change a sending rule, and does not depend on a vendor that develops the application. This is conducive to implementation.

After receiving the notification of the chat application, the electronic device 710 may determine whether an identifier that is the same as the identifier of the notification exists. If the identifier that is the same as the identifier of the notification exists, the electronic device 710 may display the notification. In this way, a same notification is not displayed. This helps improve user experience.

If no same identifier exists, the electronic device 710 may determine whether the electronic device 710 is in the screen-locked state. Because the user 750 works in the room by using the electronic device 720, the electronic device 710 may be in the screen-locked state. If the electronic device 710 is in the screen-locked state, it is determined whether the user 750 is using the electronic device 720. If the user 750 is using the electronic device 720, the electronic device 710 may transmit the notification to the electronic device 720. In this way, the notification is synchronized with the device being used by the user 750, so that the user 750 can view the notification in time.

Optionally, to protect privacy of the user 750, the electronic device 710 may further determine whether a user in addition to the user 750 is using the electronic device 720. If the another user is using the electronic device 720, the electronic device 710 may not synchronize specific content of the synchronize with the electronic device 720.

To better understand the method shown in FIG. 7, the following describes the method provided in embodiments of this application with reference to a hardware structure of the electronic device.

For example, FIG. 8A to FIG. 8F are a module interaction diagram of a notification processing method according to an embodiment of this application. The method is applicable to the scenario shown in FIG. 7. As shown in FIG. 8A, the electronic device 710 may include a screen lock module, an NMS, a distributed database, and a facial recognition module. The electronic device 720 may include an NMS, a distributed database, and a facial recognition module. The electronic device 710 may be a personal device with a camera, and is generally used by one person, for example, a mobile phone. The electronic device 720 may be a shared device with a camera, and may be shared by a plurality of persons, for example, a tablet computer and a computer.

As shown in FIG. 8A to FIG. 8F, the method may include the following step:
801: During face unlock, the screen lock module of the electronic device 710 indicates the facial recognition module of the electronic device 710 to perform facial recognition.

S802: When facial recognition succeeds, the facial recognition module of the electronic device 710 may store facial information of an owner in the distributed database of the electronic device 710.

If the facial recognition succeeds, it may indicate that a user currently using the device is the owner. The facial recognition module of the electronic device 710 may take a face screenshot of the owner, and store the facial information of the owner in the distributed database.

S803: The distributed database of the electronic device 710 may synchronize the facial information of the owner with the distributed database of the electronic device 720.

The electronic device 710 and the electronic device 720 establish a trusted relationship, and the electronic device 710 may synchronize owner information with the electronic device 720. If the electronic device 710 further establishes a trusted relationship with another device, the electronic device 710 may further transmit the owner information to the another device.

S804: In a screen-unlocked state, the facial recognition module of the electronic device 720 may determine whether the owner is included in front of the device.

If the electronic device 720 detects that the device is in the screen-unlocked state, it indicates that a user is using the device. The electronic device 720 may capture an image in front of the device by using the camera of the electronic device 720, read the facial information of the owner from the distributed database, and determine whether the image includes the facial information of the owner. If the facial information of the owner is included, the facial recognition module of the electronic device 720 may determine that the owner is included in front of the device.

Optionally, when the electronic device 710 is in a screen-locked state and the electronic device 720 is in the screen-unlocked state, the electronic device 720 may determine whether the owner is included in front of the device. If the electronic device 710 is in the screen-locked state, it may indicate that the owner is not using the device. In this case, a probability that the owner is using the electronic device 720 is high, and the electronic device 720 determines whether the owner is included in front of the device. This helps reduce power consumption of the electronic device 720.

In an example, that the electronic device 720 determines that the electronic device 710 is in the screen-locked state may include: The electronic device 710 stores, in the screen-locked state, screen lock information in the distributed database of the electronic device 710, and the distributed database of the electronic device 710 synchronizes the screen lock information with the distributed database of the electronic device 720. When the electronic device 720 is in the screen-unlocked state, the electronic device 720 may read the screen lock information from the distributed database of the electronic device 720. If the screen lock information is read, it indicates that the electronic device 710 is in the screen-locked state, and it may be determined whether the owner is included in front of the device. In this way, the electronic device 720 can determine a screen lock status of the electronic device 710. S805: When the owner is included in front of the device, the facial recognition module of the electronic device 720 may store, in the distributed database of the electronic device 720, information indicating that the owner is using the device.

S806: When the owner is included in front of the device, the facial recognition module of the electronic device 720 may further recognize a quantity of persons in front of the device.

If the quantity of persons in front of the device is greater than or equal to 2, there are users in addition to the owner in front of the device. If there is only one user in front of the device, the user can be the owner. In this way, an environment in which the owner is located is determined. This helps protect privacy of the owner.

S807: The facial recognition module of the electronic device 720 may store the quantity of persons in front of the device in the distributed database of the electronic device 720.

S808: In response to S805 and S806, the distributed database of the electronic device 720 may synchronize, with the distributed database of the electronic device 710, the information indicating that the owner is using the device and the quantity of persons in front of the device.

The electronic device 720 synchronizes, with the electronic device 710, the information indicating that the owner is using the device and the quantity of persons in front of the device. This helps subsequently perform notification reminding based on the information indicating that the owner is using the device, and helps meet a requirement of the owner.

It may be understood that, when the owner is included in front of the device, the electronic device 720 may perform S805 and S808. In another example, if the owner is not included in front of the device, the electronic device 720 may perform a plurality of methods.

In a possible case, if the owner is not included in front of the device, the facial recognition module of the electronic device 720 may store, in the distributed database of the electronic device 720, information indicating that the owner is not using the device. The distributed database of the electronic device 720 may synchronize, with the distributed database of the electronic device 710, the information indicating that the owner is not using the device.

In this way, regardless of whether the owner is using the device, the information is synchronized with the electronic device 710, so that the electronic device 710 obtains information about use of each device.

In another possible case, if the owner is not included in front of the device, the facial recognition module of the electronic device 720 may not perform any operation. The electronic device 710 may consider, by default, a device that does not receive any information as a device that is not used by the owner. In this way, excessive interaction between the electronic device 710 and the electronic device 720 is unnecessary.

S809: The server 730 may separately send the notification of the chat application to the electronic device 710 and the electronic device 720 in response to the notification of the chat application from the server 740, where the notification of the chat application carries a same identifier.

In the scenario shown in FIG. 7, both the electronic device 710 and the electronic device 720 include the notification of the chat application. Therefore, the server 730 may separately send the notification of the chat application to the electronic device 710 and the electronic device 720.

S810: The NMS of the electronic device 720 receives the notification of the chat application, and may store an identifier of the notification in the distributed database of the electronic device 720.

S811: The NMS of the electronic device 720 receives the notification of the chat application, and may further determine whether a same identifier exists in the distributed database of the electronic device 720.

If the same identifier exists, it indicates that the notification has been received. If no same identifier exists, it indicates that the notification has not been received.

S812: If no same identifier exists, the NMS of the electronic device 720 may indicate a notification center to display the notification of the chat application.

If no same identifier exists, it may indicate that the notification has not been received, and the NMS of the electronic device 720 may indicate the notification center to display the notification of the chat application. In this way, the notification that has not been received is displayed, to help the owner to view.

Optionally, when the electronic device 720 displays the notification of the chat application, the facial recognition module of the electronic device 720 may detect, in real time, a quantity of persons using the electronic device 720 and determine whether the owner is included. If the owner is not included, the electronic device 720 may hide the notification. If the owner is included, and there is a user in addition to the owner, the electronic device 720 may not display message content corresponding to the notification. If the owner is included, and there is no user other than the owner, the electronic device 720 may continuously display the notification.

In this way, privacy of the owner can be continuously protected, and flexibility is strong.

S813: If the same identifier exists, the NMS of the electronic device 720 may delete the notification of the chat application.

If the same identifier exists, it may indicate that the notification has been received, and the NMS of the electronic device 720 may delete the notification of the chat application. In this way, the notification that has been received is deleted. This helps implement that one notification is displayed only once.

S814: The NMS of the electronic device 710 receives the notification of the chat application, and may store the identifier of the notification in the distributed database of the electronic device 710.

S815: The NMS of the electronic device 710 receives the notification of the chat application, and may further determine whether the same identifier exists in the distributed database of the electronic device 720.

If the same identifier exists, it may indicate that the notification has been received, and the NMS of the electronic device 710 may delete the notification of the chat application, as shown in FIG. 7. In this way, the notification that has been received is deleted. This helps implement that one notification is displayed only once.

If no same identifier exists, it may indicate that the notification has not been received, and the electronic device 710 may determine, based on a subsequent procedure, whether the notification needs to be displayed and/or whether the notification needs to be synchronized with another device.

S816: If no same identifier exists, the NMS of the electronic device 710 may determine whether the electronic device 710 is in the screen-locked state.

If the electronic device 710 is not in the screen-locked state, it indicates that the owner is using the device, and the NMS of the electronic device 710 may indicate the notification center of the electronic device 710 to display the notification of the chat application, as shown in FIG. 7.

If the electronic device 710 is in the screen-locked state, it indicates that the owner is not using the device, and the NMS of the electronic device 710 may determine, based on a subsequent procedure, whether the notification needs to be synchronized with another device.

S817: If the electronic device 710 is in the screen-locked state, the NMS of the electronic device 710 may determine, based on information in the distributed database of the electronic device 710, whether the owner is using another device.

If the owner is using another device, the NMS of the electronic device 710 may obtain, from the distributed database of the electronic device 710, information indicating that the owner is using the another device. If the owner is not using another device, the distributed database of the electronic device 710 does not include the information indicating that the owner is using the another device.

If the electronic device 710 is in the screen-locked state, and the owner is not using another device, it indicates that the owner is not using a device. In this way, the electronic device 710 may indicate the notification center to display the notification of the chat application, and may send the notification of the chat application to each device with which the electronic device 710 establishes the trusted relationship, for example, the electronic device 720. After receiving the notification, the NMS of the electronic device 720 may perform S810 to S813. Details are not described herein again.

In this way, the owner may view the notification on each device.

Optionally, when the owner views the notification on any device, the any device may synchronize, with another device, information indicating that the notification has been viewed. The another device can delete the notification. This helps reduce a probability that the owner repeatedly processes a same notification.

If the electronic device 710 is in the screen-locked state, and the owner is using another device, the NMS of the electronic device 710 may synchronize the notification with the another device. For a specific notification manner, refer to S818, S819, and S822.

S818: If the owner is using another device, the NMS of the electronic device 710 may determine whether there are a plurality of persons in front of the another device.

It may be understood that if a quantity of persons in front of the another device is greater than or equal to 2, it indicates that there are a plurality of persons in front of the another device. If there are no plurality of persons in front of the another device, it indicates that only the owner is in front of the another device.

S819: If there are no plurality of persons in front of the another device, the NMS of the electronic device 710 may send the notification of the chat application to another device like the electronic device 720.

If there are no plurality of persons in front of the another device like the electronic device 720, it may indicate that a probability that privacy is leaked in an environment in which the owner is located is low, and the NMS of the electronic device 710 may send the notification of the chat application to the electronic device 720, so that the owner views the notification on the electronic device 720.

S820: The NMS of the electronic device 720 receives the notification of the chat application, and may store the identifier of the notification in the distributed database of the electronic device 720.

S821: The NMS of the electronic device 720 receives the notification of the chat application, and may further determine whether the same identifier exists in the distributed database of the electronic device 720.

If the same identifier exists, it may indicate that the notification has been received, and the NMS of the electronic device 720 may delete the notification of the chat application, that is, perform S813. If no same identifier exists, it may indicate that the notification has not been received, and the NMS of the electronic device 720 may indicate the notification center to display the notification of the chat application, that is, perform S812.

S822: If there are a plurality of persons in front of the another device, the NMS of the electronic device 710 may send the notification of the chat application to another device like the electronic device 720 without including the message content.

If there are no plurality of persons in front of the another device like the electronic device 720, it may indicate that the probability that privacy is leaked in the environment in which the owner is located is high, and the NMS of the electronic device 710 may send the notification of the chat application to the electronic device 720 without including the message content. In this way, the owner can receive the notification, and privacy of the owner can be protected.

S823: The NMS of the electronic device 720 receives the notification of the chat application, and may store the identifier of the notification in the distributed database of the electronic device 720.

S824: The NMS of the electronic device 720 receives the notification of the chat application, and may further determine whether the same identifier exists in the distributed database of the electronic device 720.

If the same identifier exists, it may indicate that the notification has been received, and the NMS of the electronic device 720 may delete the notification of the chat application, that is, perform S813. If no same identifier exists, it may indicate that the notification has not been received, and the NMS of the electronic device 720 may indicate the notification center to display the notification of the chat application, but not display the message content, that is, perform S825.

It can be learned from FIG. 8A that, the electronic device 710 may share the owner information with the device like the electronic device 720 with which the electronic device 710 establishes the trusted relationship, to obtain information indicating that the owner is using which device.

The NMS of the electronic device 710 receives the notification of the chat application, and indicates the notification center to display the notification in any one of the following cases.
1. No same identifier exists in the distributed database of the electronic device 710, and the electronic device is not in the screen-locked state.
2. No same identifier exists in the distributed database of the electronic device 710, the electronic device is in the screen-locked state, and the owner is not using another device.

In this way, when no same identifier exists in the distributed database of the electronic device 710, the notification is displayed. This helps reduce a probability of repeatedly displaying the notification. The electronic device 710 displays the notification when the owner is not using a device, to facilitate viewing by the user.

The NMS of the electronic device 710 receives the notification of the chat application, and may synchronize the notification with another device in the following case, where the notification includes the message content: no same identifier exists in the distributed database of the electronic device 710, the electronic device is in the screen-locked state, the owner is using another device, and there is one person in front of the another device.

In this way, the electronic device 710 synchronizes the notification with the device being used by the owner, so that the owner can view the notification in time, and use experience of the owner is improved.

The NMS of the electronic device 710 receives the notification of the chat application, and may synchronize the notification with another device in the following case, where the notification does not include the message content: no same identifier exists in the distributed database of the electronic device 710, the electronic device is not in the screen-locked state, the owner is using another device, and there are a plurality of persons in front of the another device.

In this way, the electronic device 710 synchronizes the notification with the device being used by the owner, so that the owner can view the notification in time, and use experience of the owner is improved. In addition, specific message content is not displayed, which helps protect privacy of the owner.

The NMS of the electronic device 720 receives the notification of the chat application, and may indicate the notification center to display the notification of the chat application when no same identifier exists in the distributed database of the electronic device 720.

The NMS of the electronic device 720 receives the notification of the chat application, and may delete the notification of the chat application when the same identifier exists in the distributed database of the electronic device 720.

In this way, when no same identifier exists in the distributed database of the electronic device 710, the notification is displayed, and when the same identifier exists in the distributed database of the electronic device 720, the notification of the chat application is deleted. This helps reduce the probability of repeatedly displaying the notification.

Optionally, in the method shown in FIG. 8A to FIG. 8F, after detecting that the notification has been read, if the identifier that is the same as the identifier of the notification exists in the distributed database, the electronic device 710 or the electronic device 720 may send, to another device, information indicating that the notification has been read. The another device detects a message of the notification, and may remove display of the notification from the notification center.

The foregoing describes, by using FIG. 8A to FIG. 8F, an example provided in embodiments of this application. The following describes, with reference to FIG. 9A to FIG. 10C, another example provided in embodiments of this application.

In a possible case, in the scenario shown in FIG. 7, the electronic device 720 may include the chat application, or may not include the chat application. This is not limited in embodiments of this application. The electronic device 710 has a function of synchronizing the notification of the chat application with the electronic device 720. To protect privacy of the owner, the electronic device 710 may synchronize the notification of the chat application with the electronic device 720 when the owner is using the electronic device 720 and a user using the electronic device 720 includes only the owner. Alternatively, the electronic device 710 may synchronize the notification of the chat application but does not synchronize the specific message content with the electronic device 720 when the owner is using the electronic device 720 and there is a user in addition to the owner is using the electronic device 720.

The following uses an example in which the electronic device 720 does not include the chat application for description.

For example, FIG. 9A and FIG. 9B are a module interaction diagram of a notification processing method according to an embodiment of this application. The method is applicable to the scenario shown in FIG. 7. As shown in FIG. 9A and FIG. 9B, the method may include S801 to S808. To be specific, the electronic device 710 may synchronize the facial information of the owner with the electronic device 720, and the electronic device 720 may determine, based on the facial information of the owner, whether the user using the electronic device 720 includes the owner. When the user using the electronic device 720 includes the owner, the electronic device 720 determines a quantity of users using the electronic device 720, and synchronizes, with the electronic device 710, the quantity of users and information indicating that the owner is using the electronic device 720. For specific implementation, refer to S801 to S808. Details are not described herein again.

In addition to S801 to S808, the method further includes the following steps:
S901: The server 730 responds to the notification of the chat application from the server 740, where the electronic device 710 includes the chat application, and the electronic device 720 does not include the chat application. Therefore, the server 730 may send the notification of the chat application to the electronic device 710.
S902: The NMS of the electronic device 710 receives the notification of the chat application, and the NMS of the electronic device 710 may determine, based on information in the distributed database of the electronic device 710, whether the owner is using another device.

If the owner is using another device, the NMS of the electronic device 710 may obtain, from the distributed database of the electronic device 710, information indicating that the owner is using the another device. If the owner is not using another device, the distributed database of the electronic device 710 does not include the information indicating that the owner is using the another device.

If the owner is not using another device, the NMS of the electronic device 710 may indicate the notification center to display the notification of the chat application.

S903: If the owner is using another device, the NMS of the electronic device 710 may determine whether there are a plurality of persons in front of the another device.

If there are a plurality of persons in front of the another device, it may indicate that there is a user in addition to the owner is using the another device, and a risk of leaking privacy of the owner in an environment in which the owner is located is high. If there are no plurality of persons in front of the another device, it indicates that only the owner is in front of the another device, and the risk of leaking privacy of the owner in the environment in which the owner is located is low.

If there are a plurality of persons in front of the another device, the NMS of the electronic device 710 may synchronize the notification of the chat application but does not synchronize the message content with the electronic device 720.

S904: If there are no plurality of persons in front of the another device, the NMS of the electronic device 710 may send the notification of the chat application to the NMS of the electronic device 720.

After receiving the notification of the chat application, the NMS of the electronic device 720 may determine whether the identifier that is the same as the identifier exists in the distributed database, and display the notification of the chat application when no identifier that is the same as the identifier exists, or may directly display the notification of the chat application. This is not limited in embodiments of this application.

In this way, the electronic device 710 synchronizes the notification of the chat application with the electronic device 720 when the owner is using the electronic device 720 and the user using the electronic device 720 includes only the owner. Alternatively, the electronic device 710 synchronizes the notification of the chat application but does not synchronize the specific message content with the electronic device 720 when the owner is using the electronic device 720 and there is a user in addition to the owner using the electronic device 720. This helps reduce the risk of leaking privacy of the owner when the notification is synchronized.

Optionally, when the electronic device 720 displays the notification of the chat application, the facial recognition module of the electronic device 720 may detect, in real time, the quantity of persons using the electronic device 720 and determine whether the owner is included. If the owner is not included, the electronic device 720 may hide the notification. If the owner is included, and there is a user in addition to the owner, the electronic device 720 may not display the message content corresponding to the notification. If the owner is included, and there is no user other than the owner, the electronic device 720 may continuously display the notification.

In this way, privacy of the owner can be continuously protected, and flexibility is strong.

In another possible case, in the scenario shown in FIG. 7, the electronic device 720 may include the chat application. The electronic device 710 has the function of synchronizing the notification of the chat application with the electronic device 720, and may also have a function of receiving a notification synchronized by another device. The electronic device 710 and the electronic device 720 may synchronize the screen-locked state or the screen-unlocked state, so that the electronic device 710 determines, based on a screen lock status of each device, a device that displays the notification, thereby reducing a probability that the user processes the same notification on different devices.

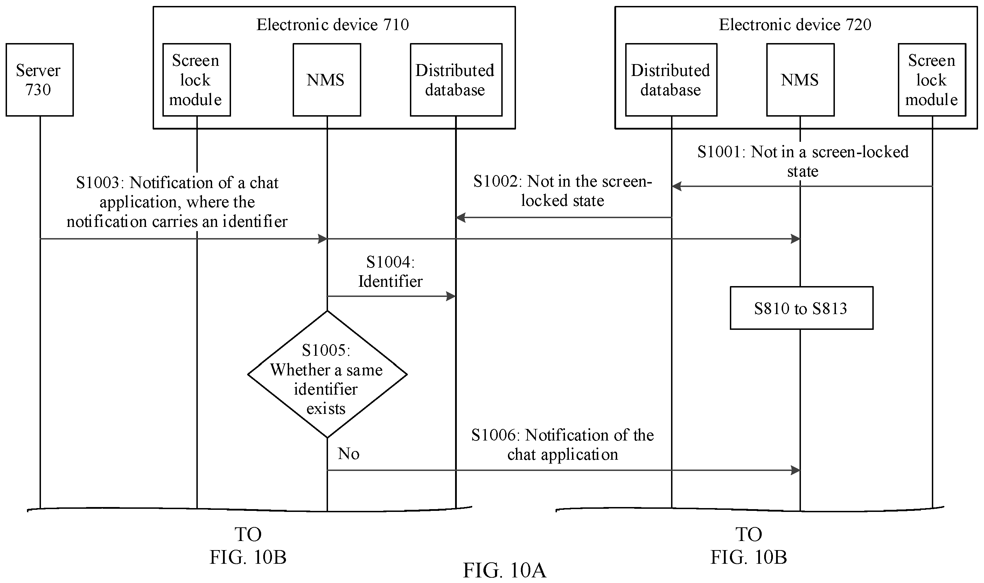

For example, FIG. 10A to FIG. 10C are a module interaction diagram of a notification processing method according to an embodiment of this application. The method is applicable to the scenario shown in FIG. 7. As shown in FIG. 10A to FIG. 10C, the method further includes the following steps.

S1001: The screen lock module of the electronic device 720 may detect whether the electronic device 720 is in the screen-locked state. When the electronic device 720 detects that the electronic device 720 is not in the screen-locked state, the screen lock module of the electronic device 720 may store, in the distributed database of the electronic device 720, information indicating that the electronic device 720 is not in the screen-locked state.

S1002: The distributed database of the electronic device 720 may synchronize, with the distributed database of the electronic device 710, the information indicating that the electronic device 720 is not in the screen-locked state.

S1003: The server 730 may separately send the notification of the chat application to the electronic device 710 and the electronic device 720 in response to the notification of the chat application from the server 740, where the notification of the chat application carries the same identifier.

The NMS of the electronic device 720 may receive the notification of the chat application from the server 730, and the NMS of the electronic device 710 may perform S810 to S813 in FIG. 8B and FIG. 8C. Details are not described herein again.

S1004: The NMS of the electronic device 710 may receive the notification of the chat application from the server 730, and the NMS of the electronic device 710 may store the identifier of the notification in the distributed database of the electronic device 710.

S1005: The NMS of the electronic device 710 receives the notification of the chat application, and may further determine whether the same identifier exists in the distributed database of the electronic device 720.

If the same identifier exists, it may indicate that the notification has been received, and the NMS of the electronic device 710 may delete the notification of the chat application, or not display the notification of the chat application.

S1006: If no same identifier exists, the NMS of the electronic device 710 may synchronize the notification of the chat application with the electronic device 720.

If no same identifier exists, it indicates that another device does not synchronize the notification with the electronic device 710, and the electronic device 710 may synchronize the notification with the electronic device 720.

S1007: If no same identifier exists, the NMS of the electronic device 710 may further determine whether the electronic device 710 is in the screen-locked state.

If the electronic device 710 is not in the screen-locked state, it may indicate that the owner is using the electronic device 710. If the electronic device 710 is in the screen-locked state, it may indicate that the owner is not using the electronic device 710.

S1008: If the electronic device 710 is not in the screen-locked state, the NMS of the electronic device 710 may indicate the notification center to display the notification of the chat application.

If the electronic device 710 is not in the screen-locked state, it may indicate that the owner is using the electronic device 710, and the electronic device 710 may display the notification of the chat application, so that the owner can view the notification.

S1009: The NMS of the electronic device 710 may further synchronize, with the electronic device 720, information indicating that the notification of the chat application has been displayed.

When the electronic device 710 has displayed the notification of the chat application, the NMS of the electronic device 710 synchronizes, with the electronic device 720, the information indicating that the notification of the chat application has been displayed, so that the electronic device 720 determines a status of the notification of the chat application.

S1010: The NMS of the electronic device 710 detects that the notification of the chat application has been read.

The notification of the chat application is viewed, and the NMS of the electronic device 710 may detect that the notification of the chat application has been read.

S1011: The NMS of the electronic device 710 may synchronize, with the electronic device 720, information indicating that the notification of the chat application has been read.

When the notification of the chat application has been read, the NMS of the electronic device 710 synchronizes, with the electronic device 720, the information indicating that the notification of the chat application has been read, so that the electronic device 720 cancels display of the chat application, thereby helping reduce a probability of repeated reminders for the user.

S1012: If the electronic device 710 is in the screen-locked state, the NMS of the electronic device 710 may further determine whether another device is in the screen-locked state.

If the electronic device 710 is in the screen-locked state, it may indicate that the owner is not using the electronic device 710. The NMS of the electronic device 710 may further determine whether another device is in the screen-locked state, to determine a device being used by the owner.

If the another device is in the screen-locked state, it may indicate that the owner is not using any device. If the another device is in the screen-unlocked state, it may indicate that the owner is using the another device.

The NMS of the electronic device 710 may obtain, from the distributed database, information about whether the another device is in the screen-locked state.

S1013: When the electronic device 720 is not in the screen-locked state, the electronic device 710 may not display the notification of the chat application.

If the electronic device 720 is not in the screen-locked state, the electronic device 710 has synchronized the notification with the electronic device 720. Therefore, the electronic device 710 may not display the notification of the chat application, so that the owner views the notification on the electronic device 720. This helps reduce a probability of repeated processing by the owner.

If the electronic device 720 is in the screen-locked state, and the electronic device 710 is also in the screen-locked state, the electronic device 710 may display the notification, so that the owner views the notification.

In the method shown in FIG. 10A to FIG. 10C, the electronic device 710 may synchronize the notification with the electronic device 720, so that the owner can view the notification on different devices. When the electronic device 710 is in the screen-unlocked state, the electronic device 710 may display the notification for the owner to view, and may transmit a display status to the electronic device 720, so that the electronic device 720 determines the display status of the notification on the electronic device 710.

When the electronic device 710 is in the screen-locked state, and the electronic device 720 is not in the screen-locked state, the electronic device 710 does not display the notification, so that the owner views the notification on the electronic device 720.

In this way, the electronic device 710 and the electronic device 720 may perform collaborative reminding and collaborative interaction on a same notification, which helps reduce a probability of repeated reminders of the same notification.

Based on the methods provided in FIG. 1A to FIG. 10C, the following scenarios may be constructed in embodiments of this application.

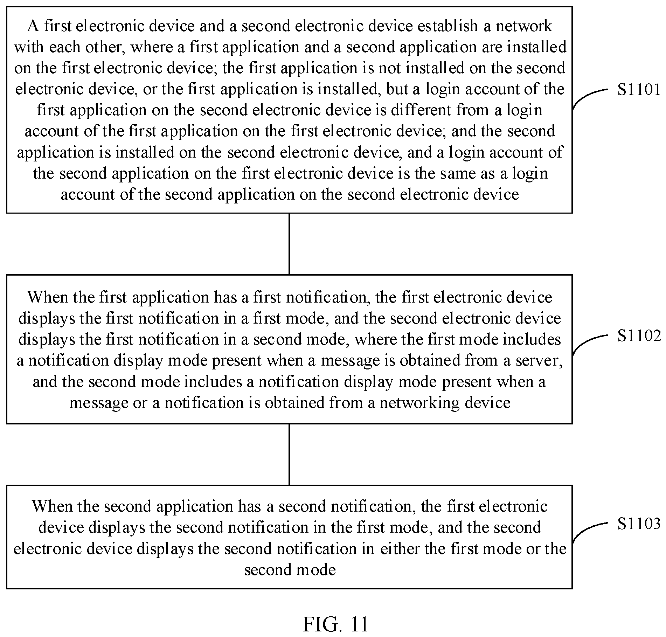

For example, FIG. 11 is a schematic flowchart of a notification processing method according to an embodiment of this application. The method may be applied to a communication system that includes a first electronic device and a second electronic device. The method may include the following steps.

S1101: The first electronic device and the second electronic device establish a network with each other, where a first application and a second application are installed on the first electronic device; the first application is not installed on the second electronic device, or the first application is installed, but a login account of the first application on the second electronic device is different from a login account of the first application on the first electronic device; and the second application is installed on the second electronic device, and a login account of the second application on the first electronic device is the same as a login account of the second application on the second electronic device.

S1102: When the first application has a first notification, the first electronic device displays the first notification in a first mode, and the second electronic device displays the first notification in a second mode, where the first mode includes a notification display mode present when a message is obtained from a server, and the second mode includes a notification display mode present when a message or a notification is obtained from a networking device.

S1103: When the second application has a second notification, the first electronic device displays the second notification in the first mode, and the second electronic device displays the second notification in either the first mode or the second mode.

The first application has the second notification, and the first electronic device may obtain the second notification from the server. Therefore, the second notification may be displayed in the first mode. The first electronic device has a notification synchronization function, and may send the second notification to the second electronic device. Although the second electronic device may obtain the second notification from the first electronic device, or may obtain the second notification from the server, the second electronic device may display the second notification in either the first mode or the second mode. This helps reduce a probability of repeatedly displaying the notification.

Optionally, that when the second application has the second notification, the second electronic device displays the second notification in either the first mode or the second mode includes: When the second application has the second notification, and the second electronic device obtains the second notification from the server, the second electronic device determines whether an identifier that is the same as a first identifier carried in the second notification is stored. When no identifier that is the same as the first identifier is stored, the second electronic device displays the second notification in the first mode, and stores the first identifier. When the second electronic device obtains the second notification from the first electronic device, the second electronic device determines whether an identifier that is the same as a first identifier carried in the second notification is stored. When the identifier that is the same as the first identifier is stored, the second electronic device does not display the second notification in the second mode. This helps reduce the probability of repeatedly displaying the notification.

Optionally, that when the second application has the second notification, the second electronic device displays the second notification in either the first mode or the second mode includes: When the second application has the second notification, and the second electronic device obtains the second notification from the first electronic device, the second electronic device determines whether an identifier that is the same as a first identifier carried in the second notification is stored. When no identifier that is the same as the first identifier is stored, the second electronic device displays the second notification in the second mode, and stores the first identifier. When the second electronic device obtains the second notification from a server, the second electronic device determines whether the identifier that is the same as the first identifier carried in the second notification is stored. When the identifier that is the same as the first identifier is stored, the second electronic device does not display the second notification in the first mode. This helps reduce the probability of repeatedly displaying the notification.

Optionally, that when the second application has the second notification, the first electronic device displays the second notification in the first mode includes: When the second application has the second notification, the first electronic device determines whether the identifier that is the same as the first identifier carried in the second notification is stored; and when no identifier that is the same as the first identifier is stored, the first electronic device sends the second notification to the second electronic device, and displays the second notification in the first mode. In this way, a probability that devices synchronize the same notification with each other is reduced.

Optionally, the method further includes: When the second application has a third notification, the first electronic device is not in a screen-locked state, and the second electronic device is in the screen-locked state, the first electronic device displays the third notification in the first mode, and the second electronic device does not display the third notification in the first mode or the second mode. In this way, the probability of repeated reminders on different devices is reduced.

Optionally, before that the second electronic device does not display the third notification in the first mode or the second mode, the method further includes: The second electronic device receives, from the first electronic device, information indicating that the third notification has been displayed. That the second electronic device does not display the third notification in the first mode, and the second electronic device does not display the third notification in the second mode includes: In response to the information indicating that the third notification has been displayed, the second electronic device does not display the third notification in the first mode, and the second electronic device does not display the third notification in the second mode.

In this way, the notification of the second application may be displayed on only one device, which helps reduce the probability of repeated reminders on different devices.

Optionally, the method further includes: When the second application has a fourth notification, the first electronic device is in the screen-locked state, and the second electronic device is not in the screen-locked state, the first electronic device does not display the fourth notification in the first mode, and the second electronic device displays the fourth notification in either the first mode or the second mode. In this way, the notification of the second application may be displayed on only one device, and a probability of repeated reminders on a same device is reduced.

Optionally, the method further includes: When the first electronic device detects that the second notification has been read, the first electronic device sends, to the second electronic device, information indicating that the second notification has been read; and the second electronic device does not display the second notification in response to the information indicating that the second notification has been read. In this way, a user performs processing only once on one device, which helps reduce a probability that the user repeatedly processes a same notification.

Optionally, the method further includes: When the first application has a fifth notification, the first electronic device does not display the fifth notification, and the second electronic device displays the fifth notification in the second mode, where a user using the second electronic device is a target user, and the target user is an owner of the first electronic device. In this way, the second electronic device displays the fifth notification, and the first electronic device does not display the fifth notification. This helps implement that one notification is displayed on only one device while privacy of the owner is protected.

Optionally, that when the first application has the fifth notification, the first electronic device does not display the fifth notification, and the second electronic device displays the fifth notification in the second mode includes: When the first application has the fifth notification, the first electronic device determines whether the target user is using the second electronic device, and if the target user is using the second electronic device, determines whether there is a user in addition to the target user using the second electronic device. When there is no user other than the target user using the second electronic device, the first electronic device does not display the fifth notification, and sends the fifth notification to the second electronic device. The second electronic device displays the fifth notification in the second mode. In this way, this helps implement that one notification is displayed on only one device while privacy of the owner is protected.

Optionally, the method further includes: When there is a user in addition to the target user using the second electronic device, the first electronic device does not send message content associated with the fifth notification to the second electronic device. This helps protect privacy of the owner.

Optionally, that the first electronic device determines whether the target user is using the second electronic device includes: When detecting that face unlock succeeds, the first electronic device obtains an image during face unlock, captures facial information in the image, and sends the facial information to the second electronic device. In response to the facial information, the second electronic device determines whether the user using the second electronic device is the target user; and when determining that the user using the second electronic device is the target user, the second electronic device sends, to the first electronic device, information indicating that the target user is using the second electronic device. The first electronic device stores, in a database, the information indicating that the target user is using the second electronic device; and the first electronic device determines, based on whether the information indicating that the target user is using the second electronic device is obtained from the database, whether the target user is using the second electronic device. In this way, the second electronic device can detect whether the user using the second electronic device is the owner.

Optionally, the method further includes: The second electronic device detects user change information, where the user change information indicates that the user using the second electronic device is not the target user, or there is a user in addition to the target user using the second electronic device; and the second electronic device hides the fifth notification, or does not display message content associated with the fifth notification. In this way, the second electronic device may change a display status of the notification based on a change of the user using the second electronic device. This helps protect privacy of the owner.

Optionally, the method further includes: The second electronic device sends the user change information to the first electronic device; and when the second application has a sixth notification, the first electronic device does not send the sixth notification to the second electronic device in response to the user change information. The second electronic device may determine, based on the user change information, whether to synchronize the notification of the application. This helps implement notification synchronization while privacy of the owner is protected.

It should be noted that names of modules in embodiments of this application may be defined as other names, provided that functions of the modules can be implemented. The names of the modules are not specifically limited.

It should be noted that user information (including but not limited to user equipment information, personal information of a user, and the like) and data (including but not limited to data used for analysis, stored data, displayed data, and the like) in embodiments of this application are information and data that are authorized by the user or fully authorized by all parties. In addition, collection, use, and processing of related data need to comply with related laws, regulations, and standards of related countries and regions. A corresponding operation entry is provided for the user to choose to authorize or reject.

The foregoing describes the notification processing method in embodiments of this application. The following describes an apparatus that is provided in an embodiment of this application and that performs the foregoing method. A person skilled in the art may understand that the method and the apparatus may be mutually combined and referenced, and the related apparatus provided in this embodiment of this application may perform the steps in the foregoing list sorting method.

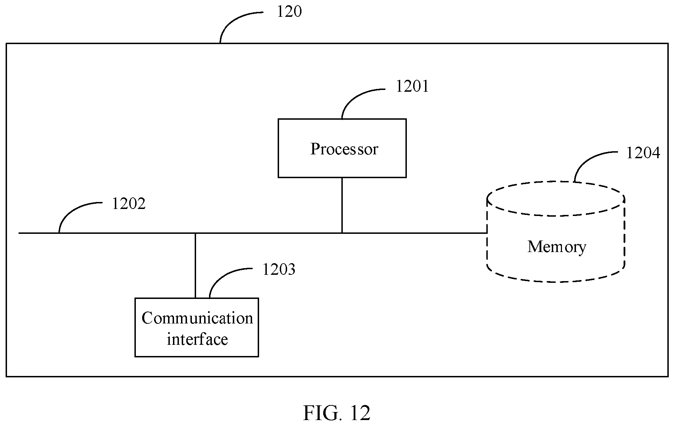

FIG. 12 is a diagram of a structure of a chip according to an embodiment of this application. As shown in FIG. 12, a chip 120 includes one or more (including two) processors 1201, a communication line 1202, a communication interface 1203, and a memory 1204.

In some implementations, the memory 1204 stores the following elements: an executable module or a data structure, or a subset thereof, or an extended set thereof.

The notification processing method described in the foregoing embodiments of this application may be applied to the processor 1201, or may be implemented by the processor 1201. The processor 1201 may be an integrated circuit chip and has a signal processing capability. In an implementation process, the steps in the foregoing notification processing method can be completed by using an integrated logic circuit of hardware in the processor 1201, or by using instructions in a form of software. The processor 1201 may be a general purpose processor (for example, a microprocessor or a conventional processor), a digital signal processor (digital signal processor, DSP), an application-specific integrated circuit (application-specific integrated circuit, ASIC), a field-programmable gate array (field-programmable gate array, FPGA) or another programmable logic device, a discrete gate, a transistor logic device, or a discrete hardware component. The processor 1201 may implement or perform processing-related methods, steps, and logical block diagrams disclosed in embodiments of this application.

The steps in the notification processing methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a read only memory, a programmable read only memory, or an electrically erasable programmable read only memory (electrically erasable programmable read only memory, EEPROM) The storage medium is located in the memory 1204, and the processor 1201 reads information in the memory 1204 and completes the steps in the foregoing methods in combination with hardware of the processor 1201.

The processor 1201, the memory 1204, and the communication interface 1203 may communicate with each other through the communication line 1202.

In embodiments, the instructions that are stored in the memory and that are to be executed by the processor may be implemented in a form of computer program product. The computer program product may be written into the memory in advance, or may be downloaded and installed in the memory in a form of software.

The notification processing method provided in embodiments of this application may be applied to an electronic device. The electronic device includes a terminal device. For a specific device form of the terminal device, refer to the foregoing related description. Details are not described herein again.

An embodiment of this application provides a terminal device. The terminal device includes one or more processors and a memory. The memory is coupled to the one or more processors, the memory is configured to store computer program code, the computer program code includes computer instructions, and the one or more processors invoke the computer instructions to enable the terminal device to perform the foregoing method.

An embodiment of this application provides a chip or a chip system. The chip or the chip system is used in an electronic device. The chip or the chip system includes at least one or more processors. The one or more processors are configured to invoke computer instructions to perform the technical solutions in the foregoing embodiments. Implementation principles and technical effect thereof are similar to those of the foregoing related embodiments. Details are not described herein again.

Embodiments of this application further provide a computer-readable storage medium. The computer-readable storage medium stores a computer program or instructions. The foregoing method is implemented when the computer program or the instructions are executed by the electronic device. All or a part of the methods described in the foregoing embodiments may be implemented through software, hardware, firmware, or any combination thereof. If the methods are implemented through the software, a function may be stored on the computer-readable medium as one or more instructions or code or transmitted on the computer-readable medium. The computer-readable medium may include a computer storage medium and a communication medium, and may also include any medium that can transfer a computer program from one place to another. The storage medium may be any target medium accessible by a computer.

In a possible implementation, the computer-readable medium may include a RAM, a ROM, a compact disc read-only memory (compact disc read-only memory, CD-ROM) or another optical disc memory, a magnetic disk memory or another magnetic storage device, or any other medium that is used to carry or store required program code in a form of instruction or data structure, and may be accessed by the computer. In addition, any connection is appropriately referred to as a computer-readable medium. For example, if a coaxial cable, an optical fiber cable, a twisted pair, a digital subscriber line (Digital Subscriber Line, DSL), or a wireless technology (for example, infrared, radio, and a microwave) is used to transmit software from a website, a server, or another remote source, the coaxial cable, the optical fiber cable, the twisted pair, the DSL, or the wireless technology such as infrared, radio, and a microwave is included in a definition of the medium. A disk and an optical disc as used herein include an optical disc, a laser disk, a digital versatile disc (Digital Versatile Disc, DVD), a floppy disk, and a blue-ray disc, where the disk generally reproduces data through magnetic means, while the optical disc optically reproduces data by using laser. The foregoing combination shall also be included in the scope of the computer-readable medium.

An embodiment of this application provides a computer program product. The computer program product includes a computer program. When computer program code is run on an electronic device, the electronic device is enabled to perform the foregoing method.

Embodiments of this application are described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processing unit of another programmable device to generate a machine, so that the instructions executed by the computer or the processing unit of the another programmable data processing device generate an apparatus for implementing a specific function in one or more procedures in the flowcharts and/or in one or more blocks in the block diagrams.

The objectives, technical solutions, and beneficial effect of the present invention are further described in detail in the foregoing specific implementations. It should be understood that the foregoing descriptions are merely specific implementations of the present invention, but are not intended to limit the protection scope of the present invention. Any modification, equivalent replacement, or improvement made on the basis of the technical solution of the present invention shall fall within the protection scope of the present invention.

## Claims

1. A notification processing method, applied to a communication system comprising a first electronic device and a second electronic device, wherein the method comprises:
establishing, by the first electronic device and the second electronic device, a network with each other, wherein a first application and a second application are installed on the first electronic device; the first application is not installed on the second electronic device, or the first application is installed, but a login account of the first application on the second electronic device is different from a login account of the first application on the first electronic device; and the second application is installed on the second electronic device, and a login account of the second application on the first electronic device is the same as a login account of the second application on the second electronic device;
when the first application has a first notification, displaying, by the first electronic device, the first notification in a first mode, and displaying, by the second electronic device, the first notification in a second mode, wherein the first mode comprises a notification display mode present when a message is obtained from a server, and the second mode comprises a notification display mode present when a message or a notification is obtained from a networking device; and
when the second application has a second notification, displaying, by the first electronic device, the second notification in the first mode, and displaying, by the second electronic device, the second notification in either the first mode or the second mode.

2. The method according to claim 1, wherein when the second application has the second notification, displaying, by the second electronic device, the second notification in either the first mode or the second mode comprises:
when the second application has the second notification, and the second electronic device obtains the second notification from the server,
determining, by the second electronic device, whether an identifier that is the same as a first identifier carried in the second notification is stored; and
when no identifier that is the same as the first identifier is stored, displaying, by the second electronic device, the second notification in the first mode, and storing the first identifier; or
when the second electronic device obtains the second notification from the first electronic device, determining, by the second electronic device, whether an identifier that is the same as a first identifier carried in the second notification is stored; and
when the identifier that is the same as the first identifier is stored, skipping displaying, by the second electronic device, the second notification in the second mode.

3. The method according to claim 1 or 2, wherein the method further comprises:
when the second application has a third notification, the first electronic device is not in a screen-locked state, and the second electronic device is in the screen-locked state, displaying, by the first electronic device, the third notification in the first mode, skipping displaying, by the second electronic device, the third notification in the first mode, and skipping displaying, by the second electronic device, the third notification in the second mode.

4. The method according to any one of claims 1 to 3, wherein the method further comprises:
when the second application has a fourth notification, the first electronic device is in the screen-locked state, and the second electronic device is not in the screen-locked state, skipping displaying, by the first electronic device, the fourth notification in the first mode, and displaying, by the second electronic device, the fourth notification in either the first mode or the second mode.

5. The method according to any one of claims 1 to 4, wherein the method further comprises:
when the first application has a fifth notification, skipping displaying, by the first electronic device, the fifth notification, and displaying, by the second electronic device, the fifth notification in the second mode, wherein a user using the second electronic device is a target user, and the target user is an owner of the first electronic device.

6. The method according to claim 5, wherein the method further comprises:
detecting, by the second electronic device, user change information, wherein the user change information comprises: the user using the second electronic device is not the target user, or there is a user in addition to the target user using the second electronic device; and
hiding, by the second electronic device, the fifth notification, or skipping displaying message content associated with the fifth notification.

7. The method according to claim 6, wherein the method further comprises:
sending, by the second electronic device, the user change information to the first electronic device; and
when the second application has a sixth notification, skipping sending, by the first electronic device, the sixth notification to the second electronic device in response to the user change information.

8. A notification processing method, applied to a second electronic device, wherein the method comprises:
establishing, by the second electronic device, a network with a first electronic device, wherein a second application is installed on both the first electronic device and the second electronic device, and a login account of the second application on the first electronic device is the same as a login account of the second application on the second electronic device;
when the second application has a second notification, and the second electronic device obtains the second notification from a server,
determining, by the second electronic device, whether an identifier that is the same as a first identifier carried in the second notification is stored; and
when no identifier that is the same as the first identifier is stored, displaying, by the second electronic device, the second notification in a first mode, and storing the first identifier, wherein the first mode comprises a notification display mode present when a message is obtained from the server; or
when the second electronic device obtains the second notification from the first electronic device, determining, by the second electronic device, whether an identifier that is the same as a first identifier carried in the second notification is stored; and
when the identifier that is the same as the first identifier is stored, skipping displaying, by the second electronic device, the second notification in a second mode, wherein the second mode comprises a notification display mode present when a message or a notification is obtained from a networking device.

9. An electronic device, wherein the electronic device comprises one or more processors and a memory, the memory is coupled to the one or more processors, the memory is configured to store computer program code, the computer program code comprises computer instructions, and the one or more processors invoke the computer instructions to enable the electronic device to perform the method according to any one of claims 1 to 7, or perform the method according to claim 8.

10. A chip system, wherein the chip system is used in an electronic device, the chip system comprises one or more processors, and the one or more processors are configured to invoke computer instructions to enable the electronic device to perform the method according to any one of claims 1 to 6, or perform the method according to claim 8.
